(19) **Europäisches Patentamt**
**European Patent Office**
**Office européen des brevets**

(11) **EP 4 614 395 A1**

(12) **EUROPEAN PATENT APPLICATION**

(43) Date of publication:
**10.09.2025 Bulletin 2025/37**

(51) International Patent Classification (IPC):
**G06N 3/098** (2023.01)   **G06N 3/084** (2023.01)

(21) Application number: **25157805.0**

(52) Cooperative Patent Classification (CPC):
**G06N 3/084; G06N 3/098**

(22) Date of filing: **13.02.2025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.03.2024 FI 20245262**

(71) Applicant: **Nokia Solutions and Networks Oy**
**02610 Espoo (FI)**

(72) Inventors:
• **KROUKA, Mounssif**
**Espoo (FI)**
• **KULKARNI, Tejas**
**Espoo (FI)**
• **KOSKELA, Antti Herman**
**Helsinki (FI)**
• **HONKALA, Mikko Johannes**
**Espoo (FI)**

(74) Representative: **Nokia EPO representatives**
**Nokia Technologies Oy**
**Karakaari 7**
**02610 Espoo (FI)**

(54) **METHODS, APPARATUS AND COMPUTER PROGRAMS**

(57) An apparatus comprising: means for computing a non-differentially private update of an approximation of a global machine learning model; means for clipping and adding noise to the non-differentially private update of the approximation of the global machine learning model, for computing a differentially private update of the approximation of the global machine learning model; and means for sending, to a server, the differentially private update of the approximation of the global machine learning model.

S202: Compute model-sized local update — 204

S203: Clip and add noise to update, and send

S201: Initialize and broadcast global model

206

202

200

S204: Calculate updated global model

208

**FIG. 2**

**Description**

TECHNICAL FIELD

Various example embodiments of this disclosure relate to methods, apparatus, system and computer programs and in particular, but not exclusively, methods, apparatus, system and computer programs relating to training of a model using federated learning, for example in a communication network.

BACKGROUND

A communication network can be seen as a facility that enables communications between two or more communication devices, or provides communication devices access to a data network. A mobile or wireless communication network is one example of a communication network. A communication device may be provided with a service by an application server.

Such communication networks operate in according with standards such as those provided by 3GPP (Third Generation Partnership Project) or ETSI (European Telecommunications Standards Institute). Examples of standards are the so-called 5G (5th Generation) standards provided by 3GPP.

SUMMARY

Some example embodiments of this disclosure will be described with respect to certain aspects. These aspects are not intended to indicate key or essential features of the embodiments of this disclosure, nor are they intended to be used to limit the scope of thereof. Other features, aspects, and elements will be readily apparent to a person skilled in the art in view of this disclosure.

According to a first aspect, there is provided an apparatus comprising: means for computing a non-differentially private update of an approximation of a global machine learning model; means for clipping and adding noise to the non-differentially private update of the approximation of the global machine learning model, for computing a differentially private update of the approximation of the global machine learning model; and means for sending, to a server, the differentially private update of the approximation of the global machine learning model.

The apparatus may comprise means for receiving an updated global machine learning model from the server.

The apparatus may comprise means for computing the deviation of the received updated global machine learning model from the global machine learning model.

The means for computing the non-differentially private update of the approximation of the global machine learning model may be for computing an averaged gradient across one or more local data samples.

The means for computing the non-differentially private update of the approximation of the global machine learning model may be for computing an averaged second order partial derivative across one or more local data samples,

According to a second aspect, there is provided a method comprising: computing a non-differentially private update of an approximation of a global machine learning model; clipping and adding noise to the non-differentially private update of the approximation of the global machine learning model, for computing a differentially private update of the approximation of the global machine learning model; and sending, to a server, the differentially private update of the approximation of the global machine learning model.

The method may comprise receiving an updated global machine learning model from the server.

The method may comprise computing the deviation of the received updated global machine learning model from the global machine learning model.

The computing the non-differentially private update of the approximation of the global machine learning model may comprise computing an averaged gradient across one or more local data samples.

The computing the non-differentially private update of the approximation of the global machine learning model may comprise computing an averaged second order partial derivative across one or more local data samples,

According to a third aspect, there is provided an apparatus comprising: means for computing a sum of one or more clipped gradients and one or more auxiliary variables, wherein each of the one or more clipped gradients are computed for one or more local data samples, said one or more auxiliary variables relating to a previous iteration of a global machine learning model; means for computing a non-differentially private update of an approximation of a global machine learning model, using the sum of the one or more clipped gradients and the one or more auxiliary variables; means for adding noise to the non-differentially private update of the approximation of the global machine learning model, for computing a differentially private update of the approximation of the global machine learning model; and means for sending, to a server, the differentially private update of the approximation of the global machine learning model.

The one or more auxiliary variables may comprise at least one of: one or more local dual variables of the previous iteration; and/or a global primal variable of the previous iteration.

The apparatus may comprise means for receiving an updated global machine learning model from the server.

The apparatus may comprise means for computing the deviation of the received updated global machine learning model from the global machine learning model.

The means for computing the non-differentially private update of the approximation of the global machine learning model may be for computing a sum of one or more clipped second order partial derivatives, wherein each of the one or more clipped second order partial derivatives are computed for each of the one or more local data samples.

According to a fourth aspect, there is provided a method comprising: computing a sum of one or more clipped gradients and one or more auxiliary variables, wherein each of the one or more clipped gradients are computed for one or more local data samples, said one or more auxiliary variables relating to a previous iteration of a global machine learning model; computing a non-differentially private update of an approximation of a global machine learning model, using the sum of the one or more clipped gradients and the one or more auxiliary variables; adding noise to the non-differentially private update of the approximation of the global machine learning model, for computing a differentially private update of the approximation of the global machine learning model; and sending, to a server, the differentially private update of the approximation of the global machine learning model.

The one or more auxiliary variables may comprise at least one of: one or more local dual variables of the previous iteration; and/or a global primal variable of the previous iteration.

The method may comprise receiving an updated global machine learning model from the server.

The method may comprise computing the deviation of the received updated global machine learning model from the global machine learning model.

The computing the non-differentially private update of the approximation of the global machine learning model may comprise computing a sum of one or more clipped second order partial derivatives, wherein each of the one or more clipped second order partial derivatives are computed for each of the one or more local data samples.

According to a fifth aspect, there is provided an apparatus comprising: means for computing a non-differentially private model-sized update of an approximation of a global machine learning model; means for adding noise to the model-sized update of the approximation of the global machine learning model, for computing a differentially private model-sized update of the approximation of the global machine learning model; and means for sending, to a server, the differentially private model-sized update of the approximation of the global machine learning model.

The means for computing the non-differentially private model-sized update of the approximation of the global machine learning model may be for computing an averaged gradient across one or more local data samples.

The means for computing the non-differentially private model-sized update of the approximation of the global machine learning model may be for computing an averaged second order partial derivative across one or more local data samples.

The apparatus may comprise means for clipping the non-differentially private model-sized update of the approximation of the global machine learning model.

The means for computing the non-differentially private model-sized update of the approximation of the global machine learning model may be for computing a sum of one or more clipped gradients and one or more auxiliary variables, said one or more auxiliary variables relating to a previous iteration of the global machine learning model, wherein the one or more clipped gradients are computed for one or more local data samples.

The means for computing the non-differentially private model-sized update of the approximation of the global machine learning model may be computing a sum of one or more clipped second order partial derivatives, wherein each of the one or more clipped second order partial derivatives are computed for each of the one or more local data samples.

The apparatus may comprise means for receiving an updated global machine learning model from the server.

The apparatus may comprise means for computing the deviation of the received updated global machine learning model from the global machine learning model.

According to a sixth aspect, there is provided a method comprising: computing a non-differentially private model-sized update of an approximation of a global machine learning model; adding noise to the model-sized update of the approximation of the global machine learning model, for computing a differentially private model-sized update of the approximation of the global machine learning model; and sending, to a server, the differentially private model-sized update of the approximation of the global machine learning model.

The computing the non-differentially private model-sized update of the approximation of the global machine learning model may comprise computing an averaged gradient across one or more local data samples.

The computing the non-differentially private model-sized update of the approximation of the global machine learning model may comprise computing an averaged second order partial derivative across one or more local data samples.

The method may comprise clipping the non-differentially private model-sized update of the approximation of the global machine learning model.

The computing the non-differentially private model-sized update of the approximation of the global machine learning model may comprise computing a sum of one or more clipped gradients and one or more auxiliary variables, said one or more auxiliary variables relating to a previous iteration of the global machine learning model, wherein the one or more clipped gradients are computed for one or more local data samples.

The computing the non-differentially private model-sized update of the approximation of the global machine learning model may comprise computing a sum of one or more clipped second order partial derivatives, wherein each of the one or more clipped second order partial derivatives are computed for each of the one or more local data samples.

The method may comprise receiving an updated global machine learning model from the server.

The method may comprise computing the deviation of the received updated global machine learning model from the global machine learning model.

The following may be provided in relation to any one of the first, third or fifth aspects.

The apparatus may comprises a user equpment and the global machine learning model is used to control the user equipment.

The apparatus may comprise means for determining one or more parameters to be provided as one or more inputs to the global machine learning model.

The global machine learning model may be for controlling spectrum usage by the user equipment.

The apparatus may be provided in a vehicle or comprise a vehicle and the global machine learning model is used to control one or more operations of the vehicle.

The apparatus may comprise means for determining one or more parameters to be provided as one or more inputs to the global machine learning model, the one or more parameter comprising one or more parameters relating to the vehicle and/or one or more parameters relating to an environment around the vehicle.

The global machine learning model may be for controlling one or more operations of the vehicle.

The global machine learning model may be used for at least one of: spectrum management; edge computing and caching; integrated sensing, communication and computation; and generative artificial intelligence content in wireless networks.

The following may be provided in relation to any one of the second, fourth or sixth aspects.

The method may be performed by an apparatus.

The apparatus may comprise at least one processor and at least one memory storing instructions that, when executed by the at least one processor, cause the apparatus at least to perform any of the methods discussed in relation to the second, fourth or sixth aspects.

The apparatus may comprises a user equpment and the global machine learning model is used to control the user equipment.

The method may comprise determining one or more parameters to be provided as one or more inputs to the global machine learning model.

The global machine learning model may be for controlling spectrum usage by the user equipment.

The apparatus may be provided in a vehicle or comprise a vehicle and the global machine learning model is used to control one or more operations of the vehicle.

The method may comprise determining one or more parameters to be provided as one or more inputs to the global machine learning model, the one or more parameter comprising one or more parameters relating to the vehicle and/or one or more parameters relating to an environment around the vehicle.

The global machine learning model may be for controlling one or more operations of the vehicle.

The global machine learning model may be used for at least one of: spectrum management; edge computing and caching; integrated sensing, communication and computation; and generative artificial intelligence content in wireless networks.

According to a seventh aspect, there is provided an apparatus comprising: means for broadcasting a global machine learning model to at least one client device; means for receiving one or more differentially private updates of an approximation of the global machine learning model, from the at least one client device; means for computing the average of the received one or more differentially private updates of the approximation of the global machine learning model, for updating the global machine learning model; and means for broadcasting the updated global machine learning model to the at least one client device.

The global machine learning model may be used for at least one of: spectrum management; edge computing and caching; integrated sensing, communication and computation; and generative artificial intelligence content in wireless networks.

The apparatus may be a server. The apparatus may be a base station.

According to an eighth aspect, there is provided a method comprising: broadcasting a global machine learning model to at least one client device; receiving one or more differentially private updates of an approximation of the global machine learning model, from the at least one client device; computing the average of the received one or more differentially private updates of the approximation of the global machine learning model, for updating the global machine learning model; and broadcasting the updated global machine learning model to the at least one client device.

The global machine learning model may be used for at least one of: spectrum management; edge computing and caching; integrated sensing, communication and computation; and generative artificial intelligence content in wireless networks.

The method may be performed by an apparatus.

The apparatus may be a server. The apparatus may be a base station.

The apparatus may comprise at least one processor and at least one memory storing instructions that, when executed by the at least one processor, cause the apparatus at least to perform any of the methods discussed in relation to the eighth aspects.

According to an aspect, there is provided a computer readable medium comprising program instructions stored thereon for performing at least one of the above methods.

According to an aspect, there is provided a non-transitory computer readable medium comprising program instructions stored thereon for performing at least one of the above methods.

According to an aspect, there is provided a non-volatile tangible memory medium comprising program instructions stored thereon for performing at least one of the above methods.

In the above, many different aspects have been described. It should be appreciated that further aspects may be provided by the combination of any two or more of the aspects described above.

Various other aspects are also described in the following detailed description and in the attached claims.

DESCRIPTION OF FIGURES

Some example embodiments will now be described, by way of non-limiting and illustrative example only, with reference to the accompanying Figures in which:

FIG. 1 shows a representation of a $5^{th}$ generation communication system;

FIG. 2 shows a schematic overview of an differential privacy federated learning (DP FL) example of some embodiments;

FIG.3 shows an example of a user-level DP FL procedure according to some example embodiments;

FIG.4 shows an example record-level DP FL procedure according to some example embodiments;

FIG. 5a and b illustrates some results when applying DP at the record-level;

FIG. 6a and b illustrates some results when applying DP at the user-level;

FIG. 7 and 8 plot the performance of the hyperparameter candidate for DP-FN-FC (solid curves) and DP-GD (dashed curves) for various privacy parameters;

FIG. 9 shows a representation of an apparatus according to some example embodiments;

FIG. 10 shows a representation of user equipment for the communication system of FIG. 1 according to some example embodiments;

FIG. 11 shows a first method of some example embodiments;

FIG. 12 shows a second method of some example embodiments;

FIG. 13 shows a third method of some example embodiments; and

FIG. 14 shows a fourth method of some example embodiments.

DETAILED DESCRIPTION

Some embodiments relate to federated learning (FL). FL is a machine learning technique. In general terms, in FL two or more entities collaboratively train a model and in which the data of the entities remains decentralised.

FL can be used in communication systems. In an example FL scenario, several client devices(for example data holding edge services and/or user equipment (UE)) may aim to train a global model in the presence of a trusted central server (for example a base station (BS) or other server). In some examples, the server may be a core network function. FL provides privacy to training data by allowing the user devices of the model to share a local machine learning (ML) model with the server while keeping data of the user equipment private. Sharing a smaller model size may provide a lower communication overhead by sharing a smaller model size, compared to raw data.

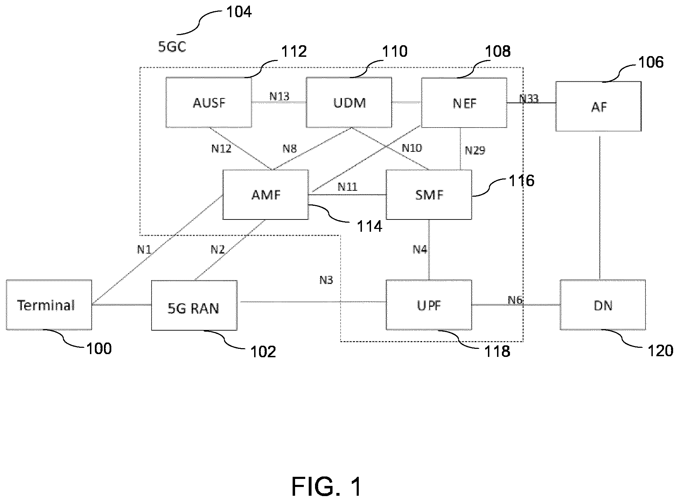

In the following, various example embodiments are explained with reference to communication devices capable of communication with a communication system. Before explaining in detail the embodiments of the methods and apparatuses of the present disclosure, a $5^{th}$ generation communication system (5GS), an access network and a core network (5GC) thereof, and communication devices are briefly explained with reference to FIG. 1. It should be noted that this is by way of example only and other embodiments may be implemented in other communication systems.

FIG. 1 shows a schematic representation of a 5G communication system (5GS). The 5GS may comprise a user equipment (UE) 100, an access network such as a 5G radio access network (5G-RAN) 102 or next generation radio access network (NG-RAN), a 5G core network (5GC) 104, and one or more application functions. An application function may be deployed in the 5GS or may be deployed or hosted on one or more application servers of the data network. The 5GS connects the UE 100 to a data network the access network and the 5GC (e.g., a UPF 118 of the 5GC).

The 5G-RAN 102 may comprise one or more radio access nodes, such as gNodeB (gNB). A gNB may include one or more gNodeB (gNB) distributed units connected to one or more gNodeB (gNB) centralized units.

The 5GC 104 may comprise the following network functions amongst others:; Network Exposure Function (NEF) 108; Unified Data Management (UDM) 110; Application Function (AF) 106; Authentication Server Function (AUSF) 112; an Access and Mobility Management Function (AMF) 114; a Session Management Function (SMF) 116; and a user plane function (UPF) 118. FIG. 1 also shows the various interfaces (N1, N2 etc.) that may be implemented between the various elements of the system.

Some examples herein consider federated learning (FL) of ML models.

In FL, instead of training a model at a central server using the centralized data, the central server provides a global model comprising parameters or data to the client devices and each of the client devices performs local training of a local model (referred to hereinafter a local model training) using a dataset comprising data of the client device during an iteration of FL. In other words, each client device has a dataset (referred to hereinafter as a local dataset) and trains a local model using its own local dataset (i.e., performs local model training For each iteration of FL each client device then sends its local training results (e.g., the 'learned' parameters of its local model) to the central server.

During each iteration of FL, the central server receives local training results for the local models from the distributed client devices and combines or aggregates the local training results to obtain new global model parameters or data (global training results for the global model).

The local training results may comprise values for the parameters of the local models and the global training results may comprise aggregated values for the parameters of the global model.

The new global model parameters or data (e.g., the aggregated received local training parameter values) can then, in a further iteration of FL, be sent to the distributed client devices and the distributed client devices use these 'new' global model parameters as the parameters of their local models and perform further local training of the local models to learn new local model parameters. This process can be repeated until the values of parameters of the global model are optimized.

In some examples, to evaluate the privacy protection of a machine learning model, a membership inference attack may be considered with respect to the local training results of a client device. Using a ML model's confidence scores, an adversary can build, for example, a classifier that infers whether a particular data sample was present in the training data set or not. In some examples, a ML model confidence score represents the likelihood that the output of the ML model is correct and will satisfy a user devices request.

In other examples, to evaluate the privacy protection of a ML model, a model inversion attack may be considered. A model inversion attack aims to reconstruct unseen training examples, using a black-box access to a ML model and knowledge about the task the target ML model has been trained to complete. The more accurate such ML models are, the more memorization is present and therefore the less privacy-preserving the target ML model is.

Differential privacy (DP) may be used in conjunction FL. In DP FL methods, noise is added to the model updates (that the local training results which are to be communicated to the central server) to enhance privacy. The noise which is added may be associated with a tractable distribution, e.g. Gaussian. Differential privacy (DP) used in conjunction with FL may formalize the privacy protection offered by FL. DP provides a mathematical upper bound for the risk of leaking information of a user device and/or individual, and allows the quantification of a precise level of acceptable individual level risk. DP may be described using probability theory and may provide formal privacy guarantees that protect data from future attacks. The privacy guarantees may be described by the parameters $\varepsilon$ and $\delta$. The parameter $\varepsilon$ defines a metric of privacy loss at a differential change in data. For example, $\varepsilon$ may define the privacy protection if single data elements and/or a single user's data is changed. In some examples, $\delta$ is a bound on an external risk not restricted by $\varepsilon$. In some examples, external risks inherently exist independently of changes in the dataset. For example, a randomised function, $M(X)$, taking a dataset $X$ as an input gives $(\varepsilon, \delta)$-DP, if for every pair of datasets $X$ and $X'$ (where $X'$ is obtained from $X$ by a change of a single data entry), and for every outcome, S, the following condition holds:

$$\mathbb{P}(M(X) \in S) \leq e^{\varepsilon}\mathbb{P}(M(X') \in S) + \delta.$$

$$(1)$$

Here the randomized function $M(X)$ may be an ML model training algorithm outputting the ML model parameters.

This is discussed in Dwork, Cynthia, et al. "Calibrating noise to sensitivity in private data analysis." Theory of Cryptography: Third Theory of Cryptography Conference, TCC 2006, New York, NY, USA, March 4-7, 2006. Proceedings 3. Springer Berlin Heidelberg, 2006.

A DP-guarantee may be specified at a record level, which upper bounds the influence of single data elements on a computation. For example, a single record can only make a bounded impact on a computation. DP may be prescribed at a user level, which upper bounds the influence of a single user's data on a computation. For example, a single user's data may comprise several records (i.e., several data elements).

DP may give a protection to ML model attacks (e.g., a membership inference attack and/or a model inversion attack). In some examples, a smaller $\varepsilon$-value represents a stronger protection.

A model may be trained with stochastic gradient descent (SGD) with DP to reduce vulnerability to attack.

The stochastic gradient descent (SGD) is an optimization tool used to train ML models. In SGD, at each iteration a subset of the training data is chosen randomly. In some examples, the subset of the training data is called a batch, denoted here $B$. The gradient of a loss function $f(x, \theta)$ (depending on a data point $x$ and the model parameters $\theta$) may be averaged over the batch to descend towards the optimal model. In some examples, the data point $x$ may be a pair $(z, y)$, where $z$ is a numerical column vector representing a feature, e.g. an image, and $y$ is a corresponding label, e.g. a class to which the image belongs to. In some examples, the model parameters $\theta$ may be weights of neural network layers. The SGD iteration can be modified such that there are $(\varepsilon, \delta)$-guarantees for the resulting model $\theta_m$. This is done by clipping data sample-wise gradients.

In some examples, clipping is a procedure where the Euclidean norm of a numerical vector is limited by scaling the elements. If the norm is larger than a predefined clipping constant, the norm of the vector is scaled such that the norm equals the predefined constant. However, if the norm is equal to or less than the predefined clipping constant, the norm is left as it is. In some examples, the SGD iteration can be modified such that there are $(\varepsilon, \delta)$-guarantees for the resulting model $\theta_m$. This may be achieved by clipping data sample-wise gradients to have a Euclidian-norm equal to or less than a predefined clipping constant, C. In some examples, the Euclidian norm may be a measure of magnitude used to define a distance between two points in space. The Euclidian norm is the magnitude of the vector, equalling the square root of the sums of the squares of its elements.

Normally distributed noise with variance $\sigma^2$ may be added to the gradients. This method may be referred to as differentially private SGD (DP-SGD). A challenge in DP-SGD training is how to mitigate the effect of the added noise, i.e., how to improve the privacy-utility trade-offs in the final model. Some known variations of DP-SGD may have good performance, for example similar to that of non-private models. However, that may be at the cost of an increased number of iterations and an overall increased compute cost.

DP FL methods may be distributed versions of DP-SGD. In DP FL methods, noise may be added (with a certain tractable distribution, e.g., Gaussian) to the model updates to enhance its privacy. When the DP noise in the model updates is additive, and the model updates are sums of user-wise updates, summation and secure aggregation is used to obtain the DP global model updates. The noise addition is offloaded to the users/user devices. This means that the users do not need to trust any central entity to add the noise. The aggregator will only see the aggregated result, which may give additional privacy. The Distributed Aggregation Protocol developed by the IETF working group outlines how to implement a secure summation.

FL model training requires multiple learning rounds (i.e., iterations) between the server (for example a BS) and the client devices (for example UEs), which may result in a large communication overhead. At every iteration, a global model may be broadcasted by the server to all participating client devices. Each client device may download the model for training on its local dataset. Each participating client device may then share the local model back to the server. Therefore, there are numerous downlink and uplink communications during the communication iterations. A large number of participating devices may incur significant communication overhead.

Consider an example, where the number of exchanged bits b between the server and the client devices during a FL training process is,

$$b = \text{T} \times \text{d} \times (N + 1) \times 32 \qquad (2)$$

wherein there is a 32-bit precision and where T is the number of training rounds (i.e., the number of iterations), d is the size of the training model and $N$ is the number of participating client devices. For a given FL task, communication efficiency can be achieved by i) reducing the number of communication rounds, T, and/or ii) by reducing the communication overhead per round, d.

A reduction in the number of training rounds may be achieved by gradient reuse and/or gradient scarification. A reduction in the size of shared updates may be provided using gradient quantization. However, applying these techniques with first-order methods may result in a relatively slow convergence.

Second order methods may speed up the convergence of first order methods (e.g., DP-SGD) by including second order-information about the loss function, privately, to the optimization. However, such method methods cannot readily be transformed into an FL algorithm due to the complexity of the noise-adding. Some such methods may be transformed into a distributed algorithm. However, this may require communicating $d$ times $d$ matrices (where $d$ is the dimension of the ML model) as opposed to the $d$-dimensional gradients of first-order methods, such as DP-SGD based FL algorithms.

Using second-order curvature information may be useful in achieving a faster rate for edge training. In some examples, second-order methods require the computation, storage and communication of a Hessian matrix. This may result in a relatively large overhead. A Hessian matrix is a square matrix of second-order partial derivatives of a scalar-valued function. In some examples, for a twice differentiable scalar-valued function, $f$, depending on scalar variables $t_1, \ldots, t_n$, the $(i, j)$-element of the Hessian matrix $H$, $1 \leq i, j \leq n$, is given by

$$H_{ij} = \frac{\partial^2}{\partial t_i \partial t_j} f(t_1, \ldots, t_n).$$

$$(3)$$

A compressed version of a Hessian matrix may be communicated to lower the communication overhead, in addition to Newton's method (or the Newton-Raphson method). Newton's method is a root finding algorithm which produces successively better approximations at each iteration to the roots of a real-value function. Newton's method may require second-order information of the loss function at each step (or iteration). In some examples, the second-order information of the loss function may be represented by the Hessian matrix. Evaluation of the Hessian matrix can be performed only at the first iteration to reduce the computation complexity. In a distributed setting (e.g., a system in which components are located on different networks or a system where the client devices are located on the same network), these options may require a higher communication cost per round compared to first-order methods, due to communication of the Hessian matrices. Generally, second-order methods incur a higher communication overhead in comparison to first-order methods.

Some example embodiments may provide a DP second order optimization method with model size communication in the context of FL. Model size communication may define communicating numerical vectors with $n$ elements rather than Hessian matrices with $n^2$ elements.

Some example embodiments may provide formal privacy guarantees and communication efficiency for FL tasks.

Some example embodiments may be implemented by one or more algorithms.

Some example embodiments provide relatively tight differential privacy bounds at both the user-level and the record-level differential privacy. For example, in user-level differential privacy, the privacy guarantees, as defined in equation (1), hold when the neighbouring dataset $X'$ is obtained from the dataset $X$ by changing a single user's data. In other examples, in record-level differential privacy the privacy guarantees defined in equation (1) hold when the neighbouring dataset $X'$ is obtained from the dataset $X$ by changing a single data entry. The advantages of fast convergence, using second-order information, and low communication overhead per iteration of first-order methods, may be combined in some example embodiments. This may provide a communication-efficient solution.

Some example embodiments may reduce communication in FL by using an approximation of the Newton-step, which requires only a model-sized communication between the client devices and the server (i.e., an approximation of Newton's method which requires only a model-sized communication). Some second-order DP methods require exchanging a covariance matrix or a Hessian matrix between network nodes. The covariance matrix may be a covariance matrix of the feature vectors. In some examples, if each data point $x$ is of the form $(z, y)$ where $z$ is a numerical column vector representing the features, e.g. an image, and $y$ is the corresponding label, e.g. a class where the image belongs to, then the feature covariance matrix for a dataset $X$ will be of the form,

$$\sum_{(z,y) \, \epsilon X} z z^T,$$

$$(4)$$

where $T$ denotes the transpose of a column vector. However, some example embodiments, utilise a specific approximation of the Newton-step at the client device, and transmit a model-sized update to the server.

Some example embodiments may provide a DP second-order optimization method that has communication cost of the order of $d$, where $d$ is the dimension of the model. This may result in a large reduction of communication overhead. Currently, DP second order methods require communication proportional to $d^2$, where $d$ is the dimension of the model. However, the method of some example embodiments requires a communication overhead proportional to $d$, such as in first-order methods.

Some example embodiments provide second-order DP methods to protect data at both the record-level and the user-level. The record-level DP formal privacy parameter $\varepsilon$ defines how well each data sample is visible in the trained ML model. For example, the record-level DP formal privacy parameter $\varepsilon$ defines the privacy protection if single data elements are changed. The user-level DP formal privacy parameter $\varepsilon$ defines how well each client device is visible in the trained ML model. For example, the user-level DP formal privacy parameter $\varepsilon$ defines the privacy protection if a single user's data is changed.

In some example embodiments, the user-level privacy guarantees may be obtained by clipping an intermediate computation at a client or user device (e.g., a data holding edge device and/or a UE) and by adding noise. In some example embodiments, to obtain the record-level privacy guarantees, a three-stage clipping algorithm is used. This may allow computing the record-level DP privacy guarantees accurately. Based on this analysis, this may provide formal privacy guarantees that show the level of protection against attacks and/or possible future attacks aiming to target a particular data entry. As an example, membership inference attacks may be considered, which aim to reveal the presence of a particular entry in the data.

The three-stage record-level clipping algorithm may allow accurate DP privacy guarantees to be obtained. This may result in a good privacy-accuracy trade-off for the trained ML model. In other words, a good performance for a given level of privacy protection may be obtained.

Some example embodiments, provide a method for controlling the amount of computation to suit different applications. In some examples, the update of the Hessian matrices for all the client or user devices at every round (or iteration) can require large amounts of computation for client or user devices with limited resources. However, some example embodiments enable the control of how often the Hessian matrices at the client devices are updated. This allows computing resources to be saved at the cost of a small decrease in the overall ML model accuracy. Since this affects the non-stochastic approximation error, i.e., not the error caused by the DP randomization, the effect of updating the Hessian matrix less frequently may be the same as in non-private cases.

The privacy of client devices data in FL settings is a component in providing applications that comply with privacy regulations. Therefore, in addition to providing formal privacy guarantees, some example embodiments can be applied to a variety of FL applications.

An example FL application may be distributed training of a predictive machine learning model. For example, FL may be used for predicting conditions of a wireless network. In this example, the client devices may not send data. In this example the client devices may only send model updates.

Some example embodiments may be used especially when data privacy, efficient bandwidth allocation, and low compute resources are of importance.

Some example embodiments may provide a differentially private, fast, and/or communication-efficient learning when solving distributed machine learning problems. Second-order information may be used for faster convergence, however the same communication overhead as first-order methods may be attained.

In the example embodiments, the terms user device, UE, user, data holding edge device and client device may be used interchangeably. In the example embodiments, the terms server, trusted central server, trusted server, core network function and BS may be used interchangeably.

In some embodiments, the client devices may be network functions and the trusted server may be another network function such as a NWDAF.

In some examples, the input of the global ML model may be sensitive data (for example, location and/or time data). In some examples, the output of the global ML model may be a prediction. In some examples, the prediction may be a simple prediction. In some examples, the output may be a categorical variable (e.g., an integer from 1 to k) and/or a binary variable.

In some examples, there is no ML inference phase. For example, there may be no inference phase as an infinite number of inferences can be made with a privately trained model, without breaking the privacy guarantees.

In some examples, the global ML model is used for at least one of: spectrum management; edge computing and caching; integrated sensing, communication and computation; and generative AI content in wireless networks. In some examples, the global ML model may be a convolutional neural network (CNN) model, a linear regression model, a logistic regression model or a generative adversarial network (GAN). Some example uses of these ML models are explained in further detail below.

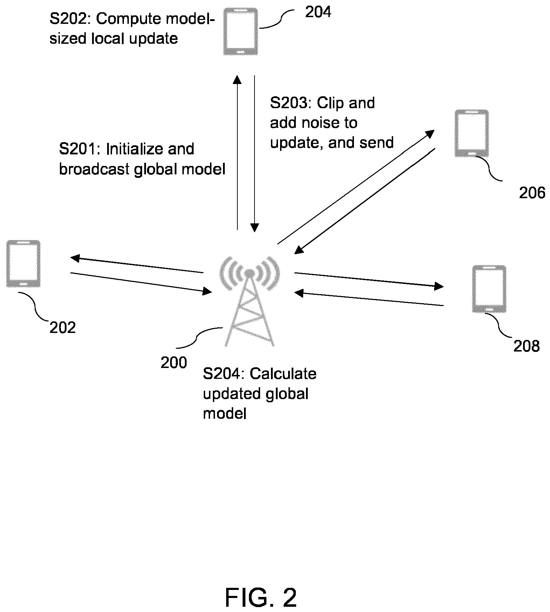

FIG. 2 shows a schematic overview of an example DP FL scenario of some example embodiments. For example, FIG. 2 shows a summary second order optimization method with model size communication in the context of FL. FIG.2 shows an example communication between a server 200 and one or client devices 202, 204, 206, 208. In some examples, the server 200 may be a trusted central server. In some examples, the sever 200 may be a core network function. In some examples, the server 200 may be a BS. In some examples, the one or more client devices 202, 204, 206, 208 may be data holding edge devices. In some examples, the one or more client devices 202, 204, 206, 208 may be UEs. In this example, the client device may be a user device. However, any client device may be used in this example.

At S201, a server 200 initialises and broadcasts a global ML model to at least one user device 202, 204, 206, 208.

At S202, each user device 202, 204, 206, 208 computes a model-sized local update.

At S203, each user device 202, 204, 206, 208 clips and adds noise to the model-sized update, and then sends the update to the server 200.

At S204, the server calculates an updated global model, based on the updates received from the at least one client device 202, 204, 206, 208, and broadcasts the updated global model to at least one client device 202, 204, 206, 208.

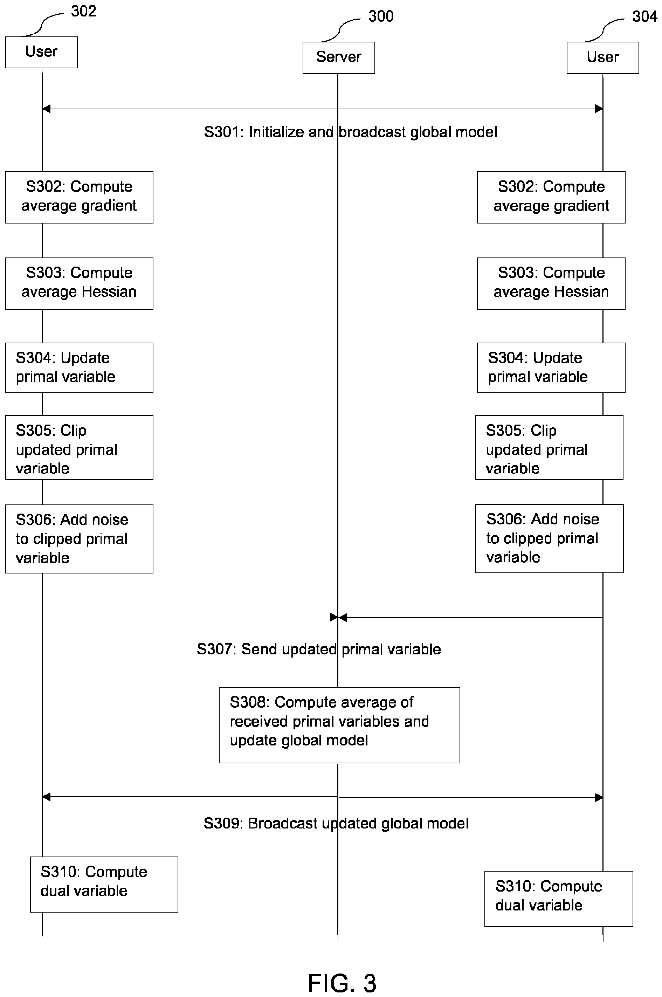

FIG.3 shows an example of a user-level DP FL procedure according to some example embodiments. The DP FL procedure may be supervised or unsupervised. FIG.3 shows an example user-level second order optimization procedure with model size communication in the context of FL. FIG. 3 shows a single iteration. The signalling exchange is between a server 300 and one or more client devices 302, 304. For the purpose of this example, there are two client devices 302, 304, however, in some cases there may be more than two participating client devices, and in some cases there may be a single participating client device. In some examples, the server 300 may be a trusted central server. In some examples, the server 300 may be a BS. In some examples, the server 300 may be a core network function. In some examples, the one or more client devices 302, 304 may be data holding edge devices. In some examples, the one or more client devices 302, 304 may be UEs. In some examples, the one or more client devices 302, 304 may be a user device However, any client device may be used in this example.

At S301, the server 300 initialises a global ML model and broadcasts it to all participating client devices 302, 304, to start the distributed learning process. In some examples, the global ML model is used for at least one of: spectrum management; edge computing and caching; integrated sensing, communication and computation; and generative AI content in wireless networks. In some examples, a global ML model is a ML model which can be trained by multiple users. In some examples, the server 300 broadcast the global ML model to all participating client devices 302, 304, for training of the global ML model at each client device 302, 304.

At S302, after receiving the global ML mode, each user device 302, 304 uses its own local dataset to compute an averaged gradient across the local dataset.

At S303, each client device 302, 304 may compute a local Hessian matrix. In some examples, each user device 302, 304 computes an averaged local Hessian matrix across the local data samples. In some examples, each data sample wise Hessian matrix (e.g., each averaged local Hessian matrix) is a matrix comprising second order partial derivatives with respect to model parameters. In some examples, each client device 302, 304 computes an approximation of a Hessian matrix. In some examples, the approximation of the Hessian matrix is an approximation of the second order partial derivative of the local data samples.

At S304, each client device 302, 304 computes a non-DP local primal variable update. In some examples, the non-DP local primal variable is a non-DP approximation of the update of the global machine learning model In some examples, each client device 302, 304 computes a non-DP update of an approximation of the global ML model. In some examples, the non-DP primal variable update is computed using equation (15) shown below.

At S305, each client device 302, 304 clips the non-DP primal variable update. In some examples, the non-DP primal variable update is clipped to keep the sensitivity of the non-DP primal variable update below a predetermined clipping constant, C. For example, clipping may limit the sensitivity of the non-DP primal variable update with respect to each client device 302, 304. In some examples, the sensitivity may be the risk of leaking information with respect to each client device 302, 304. For example, the non-DP primal variable update may be clipped to keep the risk of leaking information with respect to each client device 302, 304 below the predetermined level determined by the clipping constant, C.

At S306, each client device 302, 304 adds noise to the clipped non-DP primal variable update, resulting in a DP primal variable update. In some examples, the more noise added to the non-DP primal variable update, the better the privacy of the DP primal variable update. In some examples, the DP primal variable update is computed using equation (16) shown below.

At S307, each client device 302, 304 sends the DP primal variable update to the server 300.

At S308, after the server 300 receives the DP primal variable updates from each client device 302, 304, the server 300 computes the average of each of the received DP primal variable updates and updates the global ML model based on the computed average of each of the received DP primal variable update.

At S309, the server 300 broadcasts the updated global ML model to each of the client device 302, 304. In some examples, the server 300 broadcasts the updated global ML model for the next training iteration.

At S310, after receiving the updated global ML model, each client device 302, 304 computes local dual variables. In some examples, the local dual variables represent the deviation from an exact model update. For example, each client device 302, 304 computes how much the received updated global ML model has deviated from an exact global ML model update.

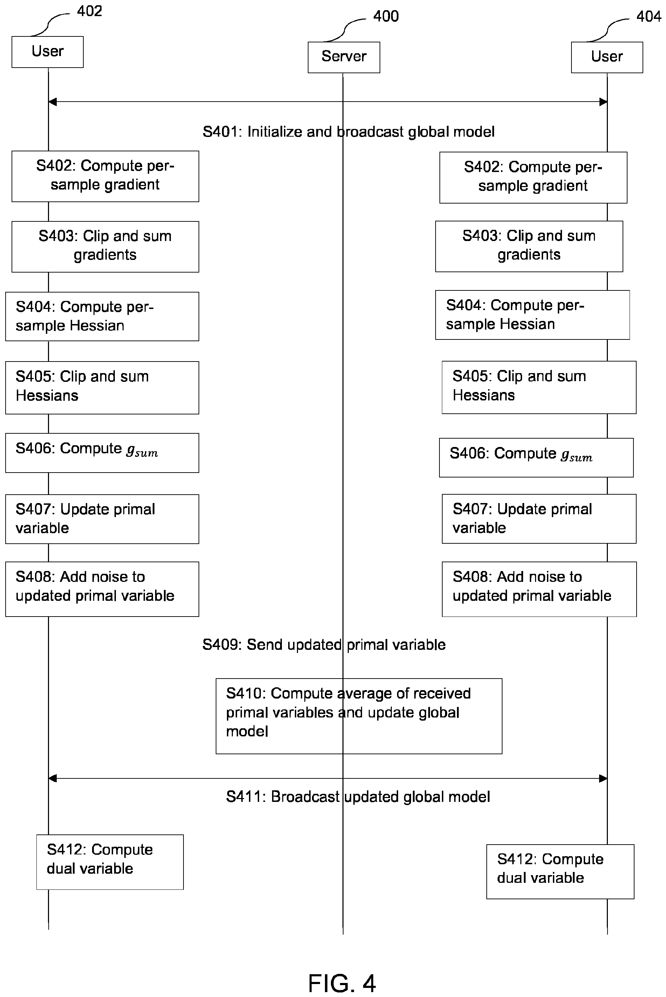

FIG.4 shows an example record-level DP FL procedure according to some example embodiments. The DP FL procedure may be supervised or unsupervised. FIG.4 shows an example record-level second order optimization procedure with model size communication in the context of FL. FIG. 4 shows a single iteration of the method. The signalling exchange is between a server 400 and one or more client devices 402, 404. For the purpose of this example, there are two client devices 402, 404, however, in some cases there may be more than two participating client devices, and in some cases there may be a single participating client device. In some examples, the server 400 may be a trusted central server. In some examples, the server 400 may be a BS. In some examples, the one or more client devices 402, 404 may be data holding edge devices. In some examples, the one or more client devices 402, 404 may be UEs. In some examples, the one or more client devices 402, 404 may be a user device. However, any client device may be used in this example.

At S401, the server 400 initialises a global ML model and broadcasts it to all participating client devices 402, 404, to start the distributed learning process. In some examples, the global ML model is used for at least one of: spectrum management; edge computing and caching; integrated sensing, communication and computation; and generative AI content in wireless networks. In some examples, a global ML model is a ML model which can be trained by multiple client devices. In some examples, the server 400 broadcast the global ML model to all participating client devices 402, 404, for training of the global ML model at each client device 402, 404.

At S402, after receiving the global ML model, each client device 402, 404 uses its own local dataset to compute a gradient for each local data sample in the local dataset. In some examples, the gradient computed for each local data sample is referred to as a per-sample gradient.

AS403, each gradient computed for each of the local data samples is clipped using a predetermined clipping constant $C_1$. For example, the per-sample gradients are clipped using $C_1$. In some examples, the per-sample gradients are clipped to keep the sensitivity of the per-sample gradients below a predetermined level determined by the clipping constant, $C_1$. For example, clipping may limit the sensitivity of the per-sample gradients to $C_1$. In some examples, the sensitivity may be the risk of leaking information with respect to each data sample. For example, the per-sample gradients may be clipped to keep the risk of leaking information with respect to each data sample below the predetermined level determined by the clipping constant, $C_1$. In some examples, after the per-sample gradients have been clipped, the per-sample gradients are summed together. Computing, clipping and summing the per-sample gradients is shown in equation (18) below.

At S404, each client device 402, 404 computes a local Hessian matrix for each local data sample. In some examples, each client device 402, 404 computes an approximation of a Hessian matrix. In some example embodiments, the Hessian matrix computed for each local data sample is a second order partial derivative of each local data sample. In some examples, the approximation of the Hessian matrix computed for each local data sample is an approximation of the second order partial derivative of each local data sample. In some examples, the local Hessian matrix computed for each local data sample is referred to a per-sample Hessian matrix.

At S405, each local Hessian matrix computed for each local data sample is clipped using a predetermined clipping constant $C_2$. For example, the per-sample Hessian matrices are clipped using $C_2$. In some examples, the per-sample Hessian matrices are clipped to keep the sensitivity of the per-sample Hessian matrices below a predetermined sensitivity constant $C_2$. For example, clipping may limit the sensitivity of the per-sample Hessian matrices to $C_2$. In some examples, the sensitivity may be the risk of leaking information with respect to each data sample. For example, the per-sample Hessian matrices may be clipped to keep the risk of leaking information with respect to each data sample below the predetermined level determined by the clipping constant $C_2$. In some examples, after the per-sample Hessian matrices have been clipped, the per-sample Hessian matrices are summed together. Computing and clipping the per-sample Hessian matrices is shown in equation (19) below.

At S406, each client device 402, 404 computes $g_{sum}$. In some examples $g_{sum}$ is a sum of the clipped gradients computed for each of the local data samples and one or more auxiliary variables. For example, $g_{sum}$ is the sum of the per-sample clipped gradients computed in S403 and one or more auxiliary variables. In some examples $g_{sum}$ is bounded by a predetermined clipping constant $C_3$. For example, if $g_{sum}$ is equal to or less than $C_3$, it is not changed. In this case, $g_{sum}$ may be computed using equation (20) below. In some examples, if $g_{sum}$ is larger than $C_3$, then $g_{sum}$ is scaled with a scalar value $\xi$ so that it is equal to or less than $C_3$. In some examples, $g_{sum}$ is bounded by $C_3$ using equation (21) below.

At S407, each client device 402, 404 computes a non-DP local primal variable update. In some examples, the non-DP local primal variable is a non-DP approximation of the update of the global machine learning model. In some examples, the non-DP primal variable update is computed using equation (22) shown below.

At S408, each client device 402, 404 adds noise to the non-DP primal variable update, resulting in an DP primal variable update. In some examples, the more noise added to the non-DP primal variable update, the better the privacy of the DP primal variable update. In some examples, the DP primal variable is computed using equation (25) shown below.

At S409, each client device 402, 404 sends the DP primal variable update to the server 400.

At S410, after the server 400 receives the DP primal variable updates from each client device 402, 404, the server 400 computes the average of each of the received DP primal variable updates and updates the global ML model based on the computed average of each of the received DP primal variable updates.

At S411, the server 400 broadcasts the updated global ML model to each of the client devices 402, 404. In some examples, the server 400 broadcasts the updated global ML model for the next training iteration.

At S412, after receiving the updated global ML model, each client device 402, 404 computes local dual variables. In some examples, the local dual variables represent the deviation from an exact model update. For example, each client device 402, 404 computes how much the received updated global ML model has deviated from an exact global ML model update.

An example non-private FL algorithm is shown below. The non-private FL algorithm may be an approximation of Newton's method. Consider an example where the goal is to minimise a loss function of the form,

$$f(x) = \frac{1}{N}\sum_{n=1}^{N} f_n(x),$$

(5)

where $x$ denotes the model variables, $f_n(x)$ is the loss function value of the $n^{th}$ device and $N$ is the total number of devices. Newton's method is then given by the iteration,

$$x^{r+1} = x^r - (\frac{1}{N}\sum_{n=1}^{N} \nabla^2 f_n(x^r))^{-1} (\frac{1}{N}\sum_{n=1}^{N} \nabla f_n(x^r)),$$

(6)

where, $r$ denotes the global iteration number (e.g., the $r^{th}$ iteration), $\nabla^2 f$ denotes the Hessian matrix and $\nabla f$ denotes the gradient. In some examples, an approximate of the Hessian matrix is used in a distributed manner. Therefore, the quantities in the Newton iteration may be approximated as follows:

$$\frac{1}{N}\sum_{n=1}^{N} \nabla^2 f_n(x^r) = H^r$$

(7)

$$\frac{1}{N}\sum_{n=1}^{N} \nabla f_n(x^r) = g^r.$$

(8)

Therefore, the Newton iteration may be approximated as,

$$x^{r+1} = x^r - (H^r)^{-1} g^r.$$

(9)

The inverse Hessian-gradient product, $(H^r)^{-1}g^r$, can be seen as a solution of a quadratic problem. In this example non-private FL algorithm client devices may similarly approximate their local quadratic problems, where the solution may be approximated using the alternating direction method of multipliers (ADMM). The alternating direction method of multipliers (ADMM) is a well-known optimization technique that decomposes a complex optimization problem into simpler subproblems, which are solved iteratively by alternately optimizing individual variables while keeping others fixed. Central to ADMM is the variable splitting strategy, which facilitates parallel computation and allows handling a wide variety of optimization tasks with different splitting approaches. The ADMM is a variant of the augmented Lagrangian scheme that uses partial updates for the dual variables.

Augmented Lagrangian methods are a certain class of algorithms for solving constrained optimization problems.

Therefore, primal variables w and dual variables $\lambda$ may be introduced with which the details of the non-private FL algorithm can be presented. The augmented Lagrangian can be formulated as follows:

$$\mathcal{L}_p(\omega, \{w_n\}_{n=1}^{N}, \lambda) = \sum_{n=1}^{N}[\frac{1}{2} w_n^T H_n^0 w_n - w_n^T g_n^r] + \sum_{n=1}^{N}\langle \lambda_n, w_n - \omega \rangle + \frac{\rho}{2}\sum_{n=1}^{N}\|w_n - \omega\|^2, \quad (10)$$

where $T$ denotes the transpose of a column vector. With this transposing, e.g., $w_n^T g_n^r$ becomes an inner product between $w_n$ and $g_n^r$, and as a result the right-hand side of equation (10) is a scalar value.

Therefore, client devices may update their local non-private ML model as follows:

$$w_n^{r,\ k+1} = (H_n^0 + \rho I)^{-1}(g_n^r - \lambda_n^{r,k} + \rho \omega^{r,k}) \quad (11)$$

where $\lambda$ and $y$ are auxiliary variables and where $k$ denotes the $k^{th}$ iteration. The server may then update the global ML model as follows:

$$\omega_n^{r,\ k+1} = \frac{1}{N}\sum_{n=1}^{N} w_n^{r,k+1}.$$

(12)

The users may update the dual variables as follows:

$$\lambda_n^{r,\ k+1} = \lambda_n^{r,\ k} + \rho\left(w_n^{r,k+1} - \omega_n^{r,k+1}\right).$$

(13)

However, to obtain the formal privacy-guarantees, the non-private FL algorithm may need to be made differentially private. Data is introduced into the iteration when the client devices update their local non-private ML model (shown by equation (11)). Some of the other operations (such as the server updating the global ML model and the users updating dual variables) are considered as post-processing. Thus, each client device may perturb the local update of the primal variables, $w_n^{r,\ k+1}$, using additive normally distributed noise. In the global update of the primal variables (i.e., when the server averages the primal variable updates received from each client device), the distributed noises add up, and may give the noise variance that protects the global update of the primal variables. Subsequently, this may give the noise variance that protects the model variables updated by the server, against possible attacks that try to infer information about the data samples. By the post-processing property of differential privacy, quantities in the iteration may have the same privacy guarantees. By using composition results, the accumulated privacy loss during the iteration may be computed and accurate privacy guarantees for the final model may be obtained. For example, existing composition results may be used to evaluate the accumulated privacy parameters, $\varepsilon$ and $\delta$.

In some example embodiments, in order to derive the mathematical privacy guarantees, the sensitivity of the product of the local update of the primal variables (i.e., $(H_n^0 + \rho I)^{-1}(g_n^r - \lambda_n^{r,k} + \rho\omega^{r,k})$) may be bound with respect to changes in the data. This differs from the typical DP-SGD sensitivity calculation in that there is now two data-dependent objects (the Hessian matrix, $H$, and the gradient, $g$). For example, in the expression of the local update of the primal variables (equation (11) above) only the Hessian matrix, $H$, and the gradient, $g$ depend on the data. In some examples, the sensitivity of the Hessian matrix, $H$, and the gradient, $g$ are hidden with added noise. In some example embodiments, using clipping operations, carried out for the Hessian matrix and for the gradient the sensitivity of the local primal variable update may be bound with respect to at least one of a: change of a single data element; and a change of user-wise contribution (which may include several data elements). In some examples, bounding the local primal variable update with respect to a change of a single data element describes clipping at the record-level. In some example embodiments, bounding the local primal variable update with respect to a change of a user-wise contribution describes clipping at the user-level. Therefore, accurate record-level and user-level privacy guarantees can be obtained.

The clipping operation may involve limiting the norm (denoted by $||.||$) of the vector or matrix by a given constant $C$:

$$clip_C(x) = \begin{cases} x, & if\ ||x|| \leq C \\ C \cdot \frac{x}{||x||}, & else. \end{cases}$$

(14)

Here, the norm refers to the square root of the sum of squares of elements.

Some example embodiments provide a clipping procedure for obtaining a DP FL algorithm that uses second-order information and avoids the need to transmit the Hessian matrices or their approximations. The user-level DP FL algorithm is shown below in Pseudocode 1 and the record-level DP FL algorithm is shown below in Pseudocode 2.

In some example embodiments, to obtain the user-level DP guarantees, the user-wise updates are clipped. Further, noise scaled with the clipping constant is added. An example for computing a DP local primal variable update at the user-level is shown in the below Pseudocode 1. In some example embodiments, Pseudocode 1 is referred to as DP-FedNew algorithm 1. Pseudocode 1 is as follows:

Input: clipping constant $C > 0$, noise parameter $\sigma > 0$, number of iterations $T$, regularization parameters $\rho$, $\gamma$ and $\alpha$, initialization of the dual variables $\lambda$ and $y$.

**for** iteration $k=1,\ldots, T$ ***do***

   ***for*** *user* $i=1,\ldots n$ *where* $n$ *is the total number of users* ***do***

      *compute the non-DP update of the primal variable,* $\hat{y}_i^k$:

$$\hat{y}_i^k = (H_i^k + \alpha I + \rho I)^{-1}\big(g_i^k - \lambda_i^{k-1} + \rho y^{k-1}\big),$$

(15)

where $I$ denotes the identity matrix, i.e. a matrix with 1's on the diagonal and 0's elsewhere.

Clip the primal variable and add noise, $E_{i,}$:

$$\hat{y}_i^k \leftarrow clip_C\big(\hat{y}_i^k\big) + E_{i,}$$

(16)

$$E_{i,} \sim \mathcal{N}\,(0, \frac{c^2\sigma^2}{n}I_d).$$

(17)

      **end for**

   **end for**

In some examples, the privacy guarantees for Pseudocode 1 are the same as the privacy guarantees of the Gaussian mechanism with noise scale $\sigma$ which can be accurately analysed.

In some example embodiments, to obtain the record-level privacy guarantees, three clipping operations may be used. An example for computing a DP local primal variable update at the record-level is shown in the below Pseudocode 2. As shown below in Pseudocode 2, the three clipping procedures are: clipping of the gradients of the local dataset; clipping of the Hessian matrices of the local dataset; and clipping the auxiliary variables. The auxiliary variables are the local dual variables $\lambda$ and the global primal variable $y$ of the previous iteration which are, after scaling the global primal variable $y$ summed together as in equation (15). In some examples, Pseudocode 2 is referred to as DP-FedNew algorithm 2. Pseudocode 2 is as follows: Input: clipping constants $C_1$, $C_2$, $C_3 > 0$, noise parameter $\sigma > 0$, number of iterations $T$, regularization parameters $\rho$ and $\alpha$. **Compute and clip the gradients of the local dataset $X_i$ with the clipping constant $C_1$ and** sum (here $x^k$ denotes the global variables at iteration k):

$$g_i^k = \frac{1}{|X_i|}\Sigma_{z\,\epsilon X_i}\,clip_{C_1}\,(\nabla f(z, x^k))$$

(18)

**Compute and clip the Hessian matrices of the local dataset $X_i$ with the clipping constant $C_2$ and sum** (here $x^k$ denotes the global variables at iteration k):

$$H_i^k = \frac{1}{|X_i|} \Sigma_{z \,\epsilon X_i} \, clip_{C_2}(\nabla^2 f(z, x^k))$$

$$(19)$$

**Carry out scaling of the auxiliary variables,** $\lambda$ and $y$, **using the clipping constant** $C_3$: if $\left\| g_i^k - \lambda_i^{k-1} + \rho y^{k-1} \right\|_2 \leq C_3$ **then**

$$g_{sum} = g_i^k - \lambda_i^{k-1} + \rho y^{k-1}$$

$$(20)$$

else

$$g_{sum} = g_i^k + \xi \cdot \left( - \lambda_i^{k-1} + \rho y^{k-1} \right),$$

$$(21)$$

where the scalar $\xi$ is chosen such that $\left\| g_i^k - \lambda_i^{k-1} + \rho y^{k-1} \right\|_2 \leq C_3$ (the value of $\xi$ can be defined using an analytic expression). **end if**

Compute the non-DP update of the primal variable:

$$\hat{y}_i^{\,k} = (H_i^k + \gamma I)^{-1} g_{sum}, \qquad\qquad (22)$$

where $\gamma = \alpha + \rho$. Generate normally distributed d-dimensional noise vector:

$$E_{i,} \sim \mathcal{N}\left(0, \frac{c^2 \sigma^2}{n} I_d\right),$$

$$(23)$$

where,

$$C = \frac{C_2}{\gamma \cdot |X_i|} + \frac{C_3 \cdot C_1}{\gamma^2 \cdot |X_i| - \gamma \cdot C_1}. \qquad\qquad (24)$$

Add the noise to the primal variable:

$$\hat{y}_i^{\,k} \leftarrow \hat{y}_i^{\,k} + E_i^k \qquad . \qquad\qquad (25)$$

In some examples, the privacy guarantees for Pseudocode 2 are the same as the privacy guarantees of the Gaussian mechanism with noise scale $\sigma$ which can be accurately analysed.

Using some example embodiments, how often the Hessian matrices at the devices are updated can be controlled. In this way, resources may be saved at the cost of a small decrease in the overall model accuracy. Since this may affect the non-stochastic approximation error, i.e., the error that is not affected by the DP randomization, the effect of updating the Hessian matrix less frequently may be the same as in non-private case. Hessian matrix evaluation and solving the associated linear systems may be an expensive part of the overall computation at the data holding edge devices (e.g., the client devices). If the Hessian matrix is updated infrequently, it may be possible to pre-process the Hessian matrix (e.g., make a matrix factorization such as the Cholesky factorization) which could speed up solving the linear systems at the data holding edge devices. In some examples, the Cholesky factorization factorizes the matrix into a product of two triangular matrices which can make linear system solving faster.

An advantage of some of the example embodiments may include achieving tight privacy guarantees at both user-level and record-level for a FL setting. The user-level and record-level DP FedNew algorithms (i.e., DP-FedNew 1 and DP-FedNew 2) is designed in a way such that the privacy guarantees are the same as the privacy guarantees of the so-called Gaussian mechanism for which there is an exact privacy analysis. For example, when applying $T$ iterations of the DP-FedNew 1 algorithm (user-level) or the DP-FedNew 2 algorithm (record-level), the same privacy guarantees are obtained as for when the Gaussian mechanism is applied $T$ times to the same dataset. The privacy guarantees may only depend on the noise scale $\sigma$ and the total number of iterations $T$.

An advantage of some example embodiments includes bandwidth efficiency with faster convergence using second-order information. Some examples may include levering curvature information and being independent on the condition-number, which allows for convergence with fewer communication rounds. This may provide a bandwidth efficient solution that is suitable for bandwidth-limited distributed learning scenarios. Further, some example embodiments may reduce communication overhead per round. The DP-FedNew algorithms may enable a communication overhead per round equal to first-order methods even when benefiting from second-order information. Therefore, some example embodiments may combine the low communication overhead per round of first-order methods, and the fast convergence of second-order methods.

Example use cases, where the privacy and communication efficiency advantages of some example embodiments can be leveraged, may include one or more of: spectrum management; edge computing and caching; integrated sensing, communication and computation; and/or generative AI content in wireless networks.

Embodiments may be used where the distributed client devices are user equipment, and the trusted server may be a base station or core network node. Some embodiments may be used with global models which require training. In some embodiments, the model is used to control one or more aspects of the user equipment. The input to the model may comprise one or more parameters which are measured or detected by the user equipment. The model may be used to select radio spectrum which is to be used by the user equipment.

In a spectrum management example, the client device, for example a UE, will observe or measure one or more parameters associated with a spectrum in the vicinity of the respective device. The parameter may relate to one or more of frequency of operation, available spectrum and/or time and frequency patterns strength of spectrum resources, and/or type of spectrum resources and/or any other suitable parameters. The one or more parameters may comprise an input or features of the model. The output or label of the model may be a position or location of the UE or classification probabilities for a set of different states of the UE and/or any other suitable output.

Considering spectrum management, the propagation physics at millimetre-wave frequencies may offer an opportunity to redefine spectrum access rules. Future 5G networks may require a hybrid spectrum landscape encompassing both low and high frequencies (microwave and millimetre-wave bands) with different licensing types to support various 5G applications. This hybrid spectrum access may require collaborative and more autonomous sharing strategies tailored to the 5G environment. The future of spectrum autonomy may rely on crowd-sourced and decentralized intelligent radio networks that collaborate for spectrum sharing, and FL may address these challenges.

Using FL, each radio (that is a client device) can train a local spectrum utilization model using the information about its frequency utilization. The frequency utilization may be spectrum occupancy data. Alternatively or additionally, the model may be trained using device non-linearity information. Alternatively or additionally, the model may be trained using detection of abnormal signals, such as interference. However, accessing radio sensory data may pose privacy and security concerns. Hence, DP-FedNew as proposed herein can be leveraged to enable privacy-preserving spectrum management for future networks with a fast convergence property of second-order methods and low communication cost per iteration property of first-order methods.

A cooperative convolutional neural network (CNN) model may be implemented for spectrum sensing.

In some examples, CNN models are artificial neural networks that can process images, speech and audio signals.

In some examples, optimal strategy can be obtained by combining sensing results of individual radio devices.

In some examples, a binary classifier may be used for detecting a presence of a signal. The binary classifier is a neural network and may have the following form. The input of the network may be a spectrogram of size $64 \times 64$. In some examples, the spectrogram image gives densities at different frequencies and times. The spectrogram may be fed to five consecutive convolutional layers of the CNN model. In some examples, the convolutional layers of the CNN model convolve the input (i.e., the spectrogram) and pass the result to the next layer. In some examples, after the spectrogram has been passed each of the convolution layers, the result is passed to one or more fully connected layers of the CNN model. In some examples, each fully connected layer of the CNN model applies a linear transformation to the input through a weights matrix.

In some examples, the $ith$ convolutional layer consists of $Ni$ filters with a dimension of $11 \times 11, 5 \times 5, 3 \times 3, 3 \times 3, 3 \times 3$ for $i = 1,2,..,5$, respectively. The output of the last layer is fed to a softmax classifier. In some examples, the softmax classifier is a supervised learning algorithm. In some examples, the softmax classifier computes the probability, $P(y = k|x; \theta)$ for $k \in \{0, 1\}$, where $x$ denotes the input spectrogram, and $\theta$ denotes the model parameters. In some examples, the loss function of the model is calculated. The loss function is a function that compares the target and predicted output values and measures how well the neural network models the training data. In some examples, the loss function is given by,

$$L(\Theta, x, y) = -y_0 \log(p_0) - y_1 \log(p_1),$$

$$(26)$$

where

$$p_i = \frac{\exp\left(P(y=i \mid x,\theta)\right)}{\exp\left(P(y=0 \mid x,\theta)\right) + \exp\left(P(y=1 \mid x,\theta)\right)},$$

$$(27)$$

$i = 0,1$ and where $P(y = i \mid x, \theta)$ denotes the neural network function output of the class probabilities.

When considering edge computing and caching, content caching and data computing at the edge of wireless networks may be an effective strategy for reducing backhaul traffic load. This approach involves placing content closer to edge terminals, such as small base stations (SBSs) and access points, allowing for local access and meeting stringent delay and bandwidth requirements. However, the success of this approach may require selecting the right content for caching. FL can be used to train and share local models without accessing local information.

For content popularity prediction, such as recommendation systems, the historical content requests of the client device and the similarity among other client devices of the network are used to train the local models.

In augmented reality (AR), search history of the client devices and their interaction with the content may be used to predict the popular elements of the augmentations from the other client devices.

Embodiments may be used where the distributed client devices are provided in vehicles. In some embodiments, the global model is used to control one or more aspects relating to autonomous control of the vehicle in which the client device is provided. The input to the model may comprise one or more parameters which are measured or detected by the client device. The one or more parameters may comprise one or more parameters relating to the vehicle itself and/or one or more parameters relating to the environment around the vehicle. The model may be used to control one or more aspects of the vehicle such as speed, location, braking and/or the like.

In self-driving cars, traffic-related information from other vehicles is obtained based on their locations, speed, and overall traffic condition. The local model may be trained based on data sensed by the client device. The data input to the model may comprises one or more of speed of device, one or more objects sensed by the device, and/or any other suitable parameters. The label of the ML model may be the position of the vehicle.

At least a part of the traffic related information may be pre-cached in road-side units. However, the required data to be used in the FL training may contain high sensitivity confidential information about one or more of the client device preferences and/or behaviour, internet history, 3D environment (location) information, and/or location of vehicles/AR users. Therefore, DP-FedNew proposed herein may provide privacy guarantees for bandwidth-limited systems with low-latency requirements.

In some examples, a linear regression model may be used for edge computing.

In an example, the task of the model may be to predict the energy consumption of the edge device (client device) based on various features (for example at least one of: temperature; pressure; humidity variables etc.). In some examples, the feature vectors are of length 32. In some examples, the loss function is given by,

$$L(\Theta, x, y) = \frac{1}{2} \left\| \theta^T x - y \right\|_2^2.$$

$$(28)$$

Some embodiments may have application to integrated sensing, communication and computation. The large number of deployed sensors (e.g., radars, cameras, lidars) - client devices, at the network edge may enable large amounts of sensory data, which enhances edge AI tasks. To implement these tasks, fusion of the physical, biological, and/or cyber worlds may be required using three main processes: sensing to obtain information from the environment; communication to share the information; and computation to further process the information for intelligent decision making. This may then require integrated sensing-communication-computation (ISCC) schemes to coordinate the three processes in specific edge AI tasks. The ISCC schemes may enhance the performance of the three processes and/or balance the co-existence of the sensing-based edge AI tasks with the conventional tasks, while guaranteeing the QoS of all tasks. FL architecture can be adopted to perform the sensing, communication, and computation processes. For example, every edge device may acquire its local data via wireless sensing, and use the sensed data to train a local model. The used data may comprise one or more of high accuracy localization, gesture capturing, activity recognition, passive object detection and tracking, and/or imaging and environment reconstruction.

Each client device may share its local model to a remote server for aggregation and update of the global model.

ISCC may enable a 6G environment-aware communication system. This may require the obtaining of private information with high accuracy and precision. Privacy-preserving tools such as DP-FedNew as proposed herein can be leveraged for data protection in sensing-based edge AI systems, for example where there is a large latency and/or communication overhead.

In some examples, for a wireless network sensing method, a CNN model may be used. The input to the model may be a spectrogram measured by a receiver and the output of the model may be a classification to different states of the environment. In an example, a network may try to sense what is happening in a limited space. By way of example, the network may try to sense which of the following five things is happening in a limited space (for example a room): child walking, child pacing, adult walking, adult pacing or standing. A human motion recognition system may be applied to simulate various human motions and generate human motion datasets. In some examples, the input of the binary classifier neural network may be a 3 channel 42x42 colour spectrogram image, and the network may consist of the following sequence of operations: 2x2 max pooling, convolution layer with a 5x5 kernel, 2x2 max pooling, flattening to vectors, one hidden layer fully connected network with a hidden width of 120 and an output dimension of 5, soft-max and cross entropy loss. In some examples, max pooling is a down sampling technique in the CNN model to reduce spatial dimensions of an input volume. In some examples, the hidden layer fully connected network defines intermediate layers between the input and output layer which process the data by applying complex non-linear functions to them. In some examples, the cross entropy loss defines a loss function in the model and is used to measure the performance of the model. The loss function may be given by,

$$L(\Theta, x, y) = -\sum_{i=1}^{5} y_i \log(p_i),$$

$$(29)$$

where

$$p_i = \frac{\exp\left(P(y=i \mid x,\theta)\right)}{\sum_{i=1}^{5} \exp\left(P(y=i \mid x,\theta)\right)}$$

$$(30)$$

and where $\theta$ denotes all the trainable model parameters (for example the convolutional Layer and the fully connected layers), and $P(y = i \mid x, \theta)$ denotes the neural network function outputting the class probabilities.

Some embodiments may be used to provide generative AI content in a wireless network. To enable Web 3.0 applications, such as the Metaverse, artificial intelligence generated content (AIGC) may be a technology to use generative AI models for producing, handling, and/or modifying diverse data, e.g., text, image, and/or audio data. Deploying AIGC services in wireless networks may enable client devices to have a real-time interactive environment, context awareness support and/or a personalized and engaging experience.

Due to large dataset and model sizes, as well as huge computational requirements, FL can be used for distributed training and fine-tuning among different processing devices/nodes. Local FL model training may use different data types from various sources, such as crowdsourcing, web scraping, user-generated content, customer data, and/or any other suitable source. Datasets used for Generative AI model training may contain sensitive and/or personal data. For this reason, processing and potentially exposing this data may create privacy concerns. Therefore, some example embodiments such a previously described may be used to help to overcome these challenges and/or comply with privacy regulations.

In some examples, a federated learning algorithm may be used for training a generative adversarial network (GAN). A GAN is a deep neural network framework which can learn from a set of training data and generate new data with the same characteristics as the training data. For example, a GAN trained on photographs of human faces can generate realistic-looking faces which are entirely fictitious. In some examples, the GAN may be a U shaped network which is fully convolutive. The GAN may take, as an input, a 2-d image of the least-squares estimated channel information (symbols over the subcarriers). The GAN may output an image of the same form.

EXPERIMENTAL RESULTS

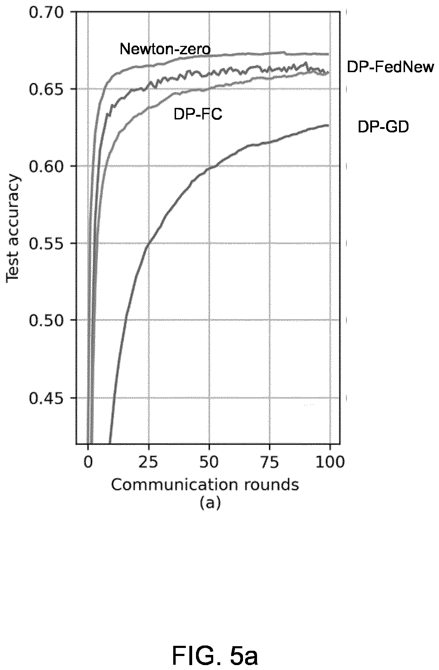

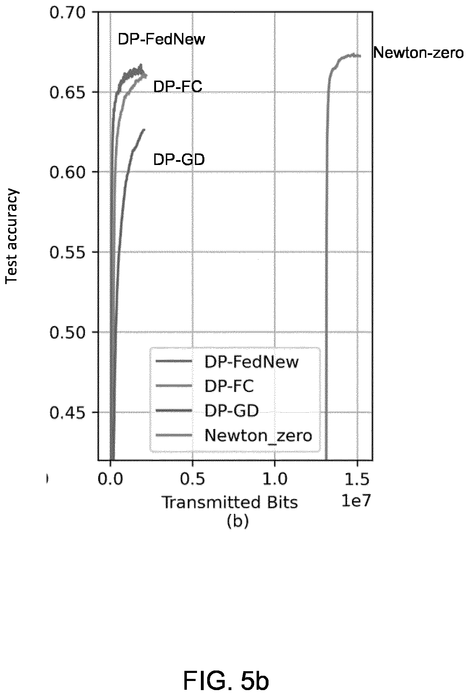

The simulation setup and results illustrating some advantages achieved using some example embodiments are shown below in FIGs. 5-8.

Consider a FL training setup using a differentially private fine-tuning of the last layer of a pretrained model. In this example, Resnet18 is used as the pretrained backbone model that was trained with ImageNet dataset. The last layer is fine-tuned using two standard datasets (CIFAR10 and Fashion MNIST). The datasets are split into training data (containing 50,000 samples), and test data (containing 10,000 samples). In this example, for the FL setting, there are 195 client devices, each having a local dataset of size 256. The size of the data features, d, is equal to the output layer of the pretrained backbone model. In this example, $d = 64$. The output layer size, c, corresponds to the number of classes (e.g., the number of possible labels). In this example, $c = 10$. The gradient size $= d \times c$. Therefore, in this example, the gradient size is 640. The simulation parameters are chosen based on the best results from the experimentations.

The performance of the DP-FedNew 1 and DP-FedNew 2 algorithms proposed herein are compared with the following baselines: a differentially private gradient descent (DP-GD) method; a differentially private SGD with feature covariance (DP-FC) method; and a Newton-zero method. The DP-GD method defines a first-order FL algorithm using a gradient decent approach, where the number of transmitted bits per client device, b, is defined by,

$$b = d \times c \times T,$$

$$(31)$$

where T the number of communication rounds, d is the size of the data features and c is the number of classes.

The DP-FC method defines a FL version of a feature covariance algorithm. In the DP-FC method the gradient updates of the client devices are preconditioned with the feature covariance matrix and the number of transmitted bits per client device is defined by,

$$b = d \times d + d \times c \times T.$$

$$(32)$$

The Newton-zero method defines a second-order algorithm based on the standard Newton's method, where the Hessian matrix is updated only at the first iteration, and the number of transmitted bits per client device is defined by,

$$b = d \times c \times d \times c + d \times c \times T.$$

$$(33)$$

The DP-FedNew 1 and DP-FedNew 2 algorithms proposed herein requires a number of transmitted bits per client device defined by equation (31).

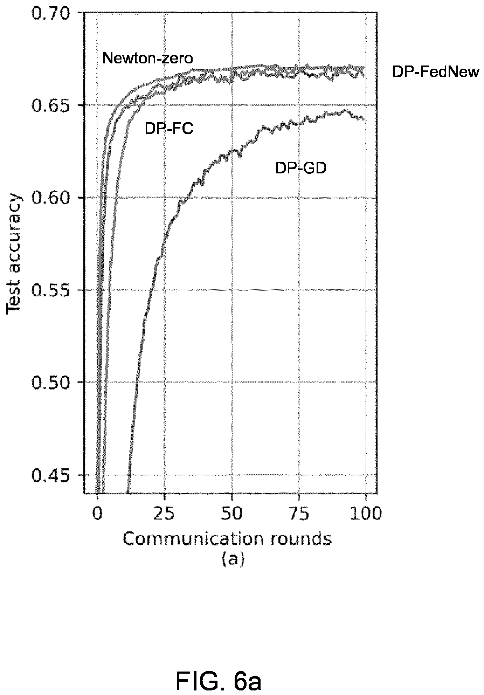

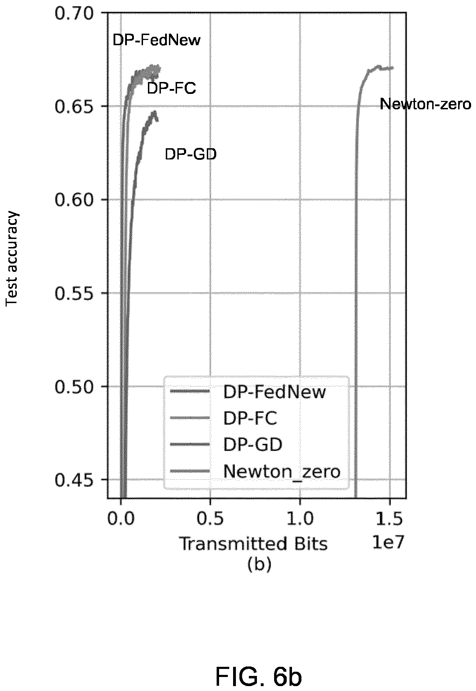

The experimental results are shown in FIGs. 5 and 6, and Table 1. FIG. 5 illustrates the results when applying DP at the record-level, with a privacy parameter $\varepsilon = 4$. DP-FedNew in FIG.5 represents the DP-FedNew 2 algorithm proposed herein. FIG. 5a shows the test accuracy with respect to the number of communication rounds (epochs) of training. FIG. 5b shows the test accuracy versus the number of transmitted bits during 100 communication rounds (epochs). FIG. 5a shows that the DP-FedNew outperforms the first-order baseline DP-GD and second-order baseline DP-FC. The DP-FC method has an extra $d^2$ communication cost at the first iteration. Newton-zero shows a better performance compared to the other solutions. However, from FIG. 5b, the Newton-zero method incurs a huge communication cost compared to the other algorithms due to the Hessian matrix transmission. DP-FedNew achieves the lowest number of required transmitted bits compared to all the baselines.

FIG. 6 shows the results for DP at the user-level, with a privacy parameter $\varepsilon = 4$. DP-FedNew in FIG.6 represents the DP-FedNew 1 algorithm proposed herein. FIG. 6a shows the accuracy versus the number of communication rounds (epochs) of training. FIG. 6b shows the test accuracy versus the number of transmitted bits during 100 communication rounds (epochs) of training. DP-FedNew, DP-FC, and Newton-zero exhibit close performances in terms of test accuracy. The DP-FC method has an extra $d^2$ communication cost at the first iteration. DP-GD suffers from the slow convergence inherited in first-order methods. FIG. 6b shows that DP-FC achieves slightly higher test accuracy than DP-FedNew, at the expense of considerably higher required bandwidth.

Table 1 below shows the details about the communication-cost incurred by the different solutions to reach their maximum test accuracy. Table 1 shows the maximum test accuracy reached during the 100 communication rounds of training, the number of transmitted bits and the percentage of bandwidth savings. For both the record- and user-level cases, DP-FedNew (i.e., the DP-FedNew 1 and 2 algorithms) achieve the lowest communication overhead among all the baselines. For record-level DP, DP-FedNew (i.e., the DP-FedNew 2 algorithm) provides savings in the communication bandwidth that are between 28% and 91% compared to all other baselines. For DP at the user-level, the savings vary from 8% up to 87%. This reflects the bandwidth efficiency advantage of DP-FedNew (i.e., the DP-FedNew 1 algorithm), which is an advantage for bandwidth-limited distributed learning settings.

Table 1: Performance of the DP-FedNew algorithms compared with the DP-FC, DP-GD and Newton-zero baselines.

| Algorithm | Maximum Test Accuracy | | Transmitted Bits | | Bandwidth Savings Percentage | |
|---|---|---|---|---|---|---|
| | User-Level DP | Record-Level DP | User-Level DP | Record-Level DP | User-Level DP | Record-Level DP |
| DP-FedNew | 66.9% | 66.7% | 1.25 Mbits | 1.86 Mbits | n/a | n/a |
| DP-FC | 67.2% | 66.1% | 1.75 Mbits | 2.06 Mbits | 28.57% | 9.36% |
| DP-GD | 64.7% | 62.62% | 1.9 Mbits | 2.03 Mbits | 34.41% | 8.08% |
| Newton-zero | 67.1% | 67.4% | 14.38Mbits | 14.79Mbits | 91.31% | 87.40% |

The performance of DP-FedNew on larger models is also considered. The following experiments show that the DP-FedNew algorithms (i.e., DP-FedNew 1 and DP-FedNew 2) can be scaled to large feature dimensions. In each step, the DP-FedNew 2 algorithm requires each client (i.e., each user device) to compute a local Hessian matrix (with $d \times c \times d \times c$ elements) for all samples, $N$. The computation and memory requirements of computing the local Hessian matrix (i.e., of second order) can be prohibitive in some use cases.

For example, for a client (i.e., a user device) with 256 local records and where $d$ = 512, $c$ = 10, and 4 bytes for each numerical element is reserved, the per-sample Hessian matrices may occupy a total of about 26.84 GBs (512 x 512 x 10 x 10 x 256 x 4 ~ 26.84 GBs). Sequential Hessian matrix computation is an option, but the benefit of vectorized computations offered by modern accelerators (e.g. graphics processing units (GPUs)) might be lost, yielding almost a 10X increase in the run time. In some examples, the sequential Hessian matric computation defines a computation where the data sample wise second order derivatives are computed sequentially one at a time.

The memory requirement may be reduced by replacing the per-sample Hessian matrix with a per-sample feature covariance matrix (of size $d \times d$). The corresponding covariance matrices require a total of about 0.26GBs. Such proxy does not affect the privacy analysis and experiments show that little accuracy is lost.

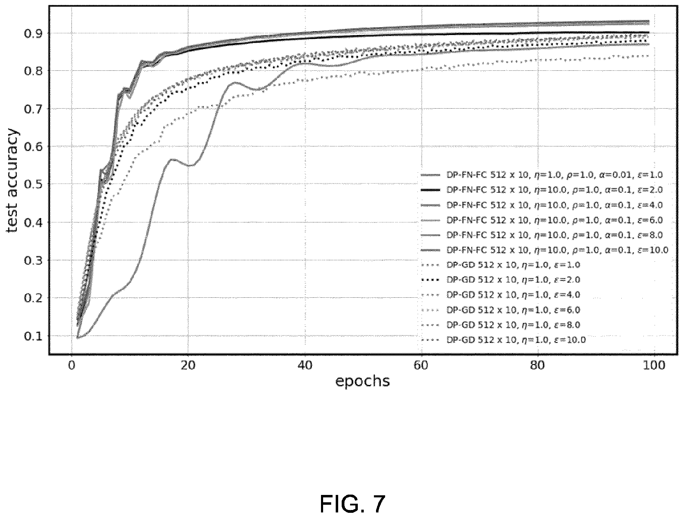

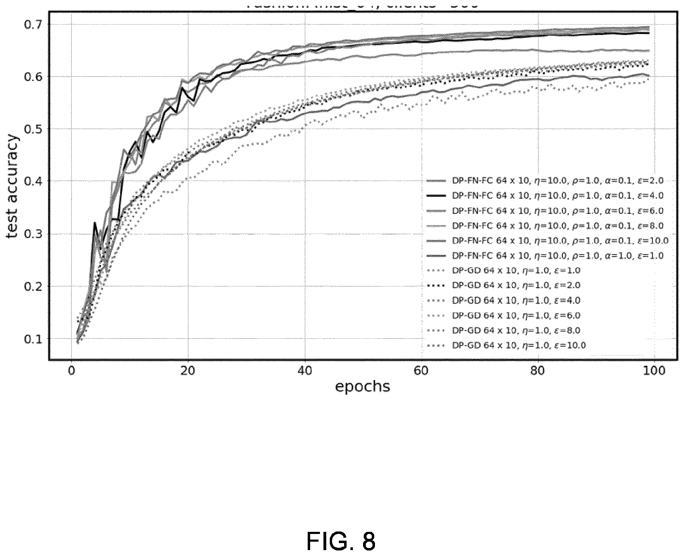

The performance of the feature covariance matrix variant of DP-FedNew (denoted by DP-FN-FC) , across several hyperparameters and privacy parameters ($\varepsilon$), is shown in FIGs. 7 and 8. In this example, the averaged Hessian is replaced by an averaged feature covariance matrix. The following data sets are used; Emnist (model size 512 x 10); and FashionMnist (model size 64 x 10). For DP-FN-FC, the regularization parameters $\rho$ and $\alpha$ (see equation (15)) are varied. More specifically, the scalar $\rho + \alpha$ is added to the diagonal elements of the Hessian matrix before using it for computing the update of the primal variable, and the scalar value $\rho$ is used for scaling the global primal variable of previous before adding it to the averaged gradients (see equation (15)). For example, for the first order baseline, only the leaning rate hyperparameter is optimized. For DP-FN-FC, in addition to the learning rate, the regularization parameters $\rho$ and $\alpha$ are optimized. In some examples, the learning rate defines a scalar by which the model update vector is scaled at each iteration. The remaining setup is the same as for the FL training setup, discussed above in relation to FIGs. 5 and 6.

FIGs. 7 and 8 plot the performance of the best hyperparameter candidate for DP-FN-FC (solid curves) and DP-GD (dashed curves) for privacy parameters $\varepsilon$ = {1,2,4,6,8,10}. FIG. 7 shows hyperparameter tuning for the Emnist (mode size 512 x 10) model with record-level results for DP-FN-FC and DP-GD, and with several privacy parameters and/or budgets. In this example the number of clients is 500. The learning rate is tuned for DP-GD, and constants $\rho$ and $\alpha$ are tuned for DP-FN-FC. FIG. 8 shows hyperparameter tuning for the FashionMnist (model size 64 x 10) model, with record-level results for DP-FN-FC and DP-GD, and with several privacy parameters and/or budgets. In this example the number of clients is 500. The learning rate is tuned for DP-GD, and constants $\rho$ and $\alpha$ are tuned for DP-FN-FC. It can be seen from FIGs. 7 and 8 that the DP-FN-FC method maintains its performance lead over the baseline throughout the training process for most privacy parameters, $\varepsilon$.

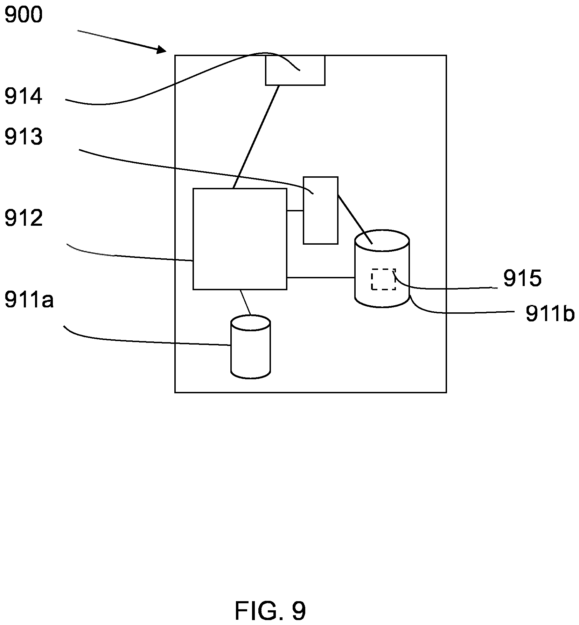

FIG. 9 illustrates an example of an apparatus 900.

The apparatus may be or provide a server, such a previously described. The apparatus 900 may have at least one processor and at least one memory storing instructions that, when executed by at least one of the at least one processor cause operations or actions of at least a part of the server to be provided.

Alternatively, the apparatus 900 may comprise or implement at least a part of the client device such as previously described. The apparatus 900 may have at least one processor and at least one memory storing instructions that, when executed by at least one of the at least one processor cause operations or actions of at least a part of the client device to be performed.

The apparatus 900 may comprise at least one random access memory (RAM) 911a, at least one read only memory (ROM) 911b, at least one processor 912, 913 and a network interface 914. The at least one processor 912, 913 may be coupled to the RAM 911a and the ROM 911b. The at least one processor 912, 913 may be configured to execute an appropriate software code 915.

Execution of the software code 915 may for example cause the apparatus to perform operations for providing one or more of the described aspects. The software code 915 may be stored in the ROM 911b.

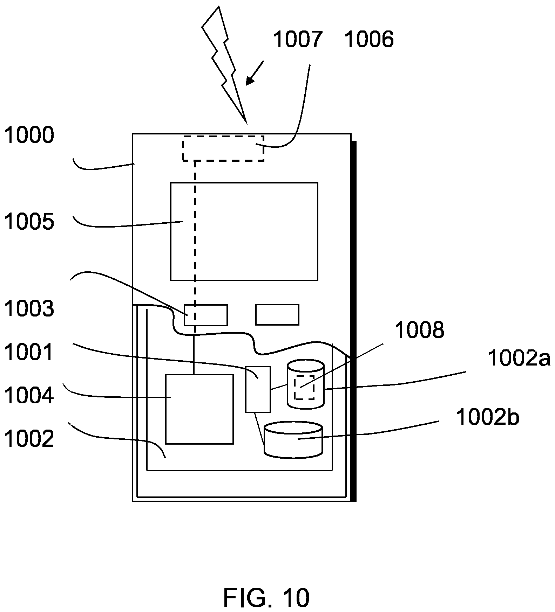

FIG. 10 illustrates an example of a communication device 1000, such as the UE illustrated on FIG. 1. The communication device 1000 may be provided by any device capable of sending and receiving radio signals. Non-limiting examples of a communication device 1000 comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (IoT) type communication device or any combinations of these or the like. The communication device 1000 may comprise a transceiver for transmitting and/or receiving, for example, wireless signals carrying communications, for example radio signals. The communications may be one or more of voice, electronic mail (email), text messages, multimedia data, machine data and so on.

The communication device 1000 may receive wireless signals (e.g., radio signals) over an air or radio interface 1007 via appropriate apparatus for receiving and may transmit wireless signals via appropriate apparatus for transmitting radio signals. In FIG. 10 transceiver is designated schematically by block 1006. The transceiver 1006 may comprise, for example, a radio part and associated antenna arrangement. The antenna arrangement may be arranged internally or externally to the mobile device and may comprise one or more antenna elements. The antenna arrangement may be a multi-input multi output (MIMO) antenna.

The communication device 1000 may be provided with at least one processor 1001, at least one memory (for example ROM 1002a and RAM 1002b) and other possible components 1003 for use in software and hardware aided execution of tasks it is designed to perform, including control of access to and communications with access networks and other communication devices. The at least one processor 1001 is coupled to the RAM 1002b and the ROM 1002a. The at least one processor 1001 may be configured to execute an appropriate software code 1008. The software code 1008 may for example allow to perform one or more operations of the communication device 1000. The software code Y08 may be stored in the ROM 1002a. The processor, the ROM, and the RAM, the transceiver and other circuitry of the communication device (e.g., a modem) can be provided on a circuit board, in chipsets, or in a system on chip. This circuit board, chipsets or system on chip is denoted by reference 1004. The communication device 1000 may optionally have a user interface such as keypad 1005, touch sensitive screen or pad, combinations thereof or the like. Optionally one or more of a display, a speaker and a microphone may be provided depending on the type of the communication device.

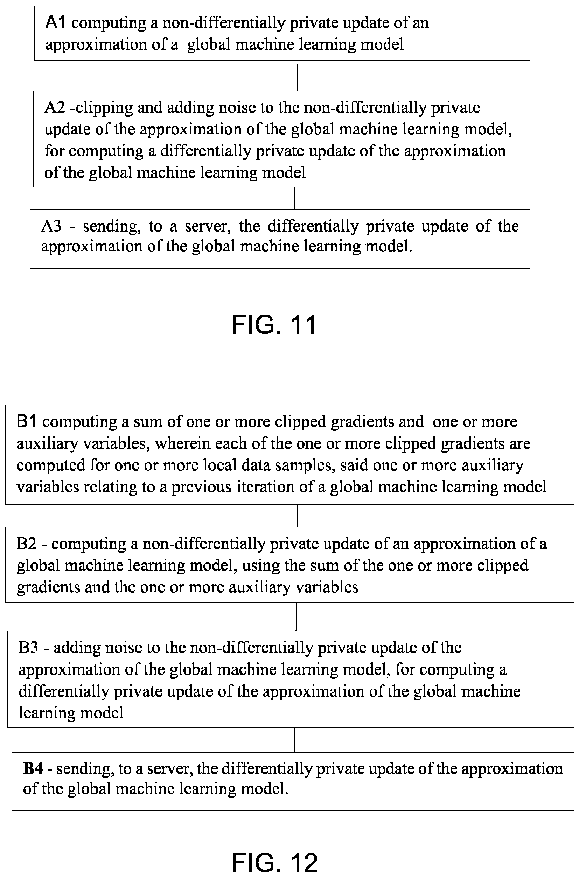

Reference is made to FIGs. 11, 12, and 13 which show methods of some example embodiments.

This method may be performed by an apparatus.

The apparatus may comprise or be a client device.

The apparatus may comprise suitable means, such as circuitry for providing the method.

Alternatively or additionally, the apparatus may comprise at least one processor and at least one memory storing instructions that, when executed by the at least one processor cause the apparatus at least to provide the method below.

Alternatively or additionally, the apparatus may be such as discussed in relation to FIG. 9 or 10.

The method may be provided by computer program code or computer executable instructions.

Referring to FIG. 11:

The method may comprise as referenced A1, computing a non-differentially private update of an approximation of a global machine learning model.

The method may comprise as referenced A2, clipping and adding noise to the non-differentially private update of the approximation of the global machine learning model, for computing a differentially private update of the approximation of the global machine learning model.

The method may comprise as referenced A3, sending, to a server, the differentially private update of the approximation of the global machine learning model.

Referring to FIG. 12:

The method may comprise as referenced B1, computing a sum of one or more clipped gradients and one or more auxiliary variables, wherein each of the one or more clipped gradients are computed for one or more local data samples, said one or more auxiliary variables relating to a previous iteration of a global machine learning model.

The method may comprise as referenced B2, computing a non-differentially private update of an approximation of a global machine learning model, using the sum of the one or more clipped gradients and the one or more auxiliary variables;

The method may comprise as referenced B3, adding noise to the non-differentially private update of the approximation of the global machine learning model, for computing a differentially private update of the approximation of the global machine learning model.

The method may comprise as referenced B4, sending, to a server, the differentially private update of the approximation of the global machine learning model.

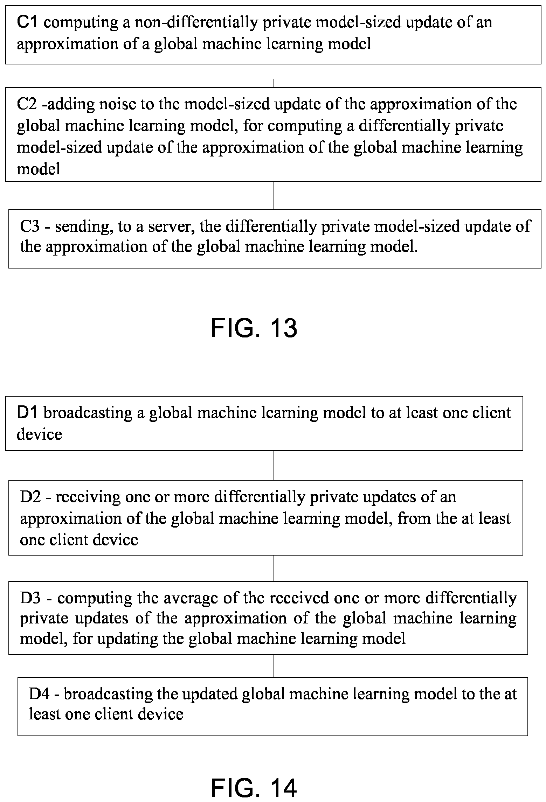

Referring to FIG. 13:

The method may comprise as referenced C1, computing a non-differentially private model-sized update of an approximation of a global machine learning model.

The method may comprise as referenced C2, adding noise to the model-sized update of the approximation of the global machine learning model, for computing a differentially private model-sized update of the approximation of the global machine learning model.

The method may comprise as referenced C3, sending, to a server, the differentially private model-sized update of the approximation of the global machine learning model.

Reference is made to FIG. 14 which shows a method of some example embodiments.

This method may be performed by an apparatus.

The apparatus may comprise or be a server.

The apparatus may comprise suitable means, such as circuitry for providing the method.

Alternatively or additionally, the apparatus may comprise at least one processor and at least one memory storing instructions that, when executed by the at least one processor cause the apparatus at least to provide the method below.

Alternatively or additionally, the apparatus may be such as discussed in relation to FIG. 9.

The method may be provided by computer program code or computer executable instructions.

The method may comprise as referenced D1, broadcasting a global machine learning model to at least one client device.

The method may comprise as referenced D2, receiving one or more differentially private updates of an approximation of the global machine learning model, from the at least one client device.

The method may comprise as referenced D3, computing the average of the received one or more differentially private updates of the approximation of the global machine learning model, for updating the global machine learning model.

The method may comprise as referenced D4, broadcasting the updated global machine learning model to the at least one client device.

Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used herein, the term "circuitry" may refer to one or more or all of the following:

(a) hardware-only circuit implementations (such as implementations in only analog and/or digital circuitry) and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term herein, including in any claims. As a further example, as used herein, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the FIGs may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Various example embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various example embodiments of the disclosure is set out by the independent claims. The example embodiments and features thereof, if any, described in this disclosure that do not fall under the scope of the independent claims are to be interpreted as examples useful for understanding various example embodiments of the disclosure.

The foregoing description has provided, by way of non-limiting and illustrative examples, a full and informative description of the various example embodiments of this disclosure. However, various modifications and adaptations may become apparent to those skilled in the relevant arts in view of the foregoing description, when read in conjunction with the accompanying drawings and the claims. However, all such and similar modifications of the teachings will still fall within the various example embodiments of the disclosure as set forth in the claims. By way of non-limiting and illustrative example, there is a further example embodiment comprising a combination of one or more example embodiments with any of the other example embodiments previously discussed.

**Claims**

1. An apparatus comprising:

    means for computing a non-differentially private update of an approximation of a global machine learning model, comprising computing an averaged second order partial derivative across one or more local data samples;
    means for clipping and adding noise to the non-differentially private update of the approximation of the global machine learning model, for computing a differentially private update of the approximation of the global machine learning model; and
    means for sending, to a server, the differentially private update of the approximation of the global machine learning model.

2. The apparatus of claim 1, further comprising means for receiving an updated global machine learning model from the server.

3. The apparatus of claim 2, further comprising means for computing the deviation of the received updated global machine learning model from the global machine learning model.

4. The apparatus of any of claims 1 to 3, wherein the means for computing the non-differentially private update of the approximation of the global machine learning model is for computing an averaged gradient across one or more local data samples.

5. An apparatus comprising:

means for computing a sum of one or more clipped gradients and one or more auxiliary variables, wherein each of the one or more clipped gradients are computed for one or more local data samples, said one or more auxiliary variables relating to a previous iteration of a global machine learning model;

means for computing a non-differentially private update of an approximation of a global machine learning model, using the sum of the one or more clipped gradients and the one or more auxiliary variables, and a sum of one or more clipped second order partial derivatives, wherein each of the one or more clipped second order partial derivatives are computed for each of the one or more local data samples;

means for adding noise to the non-differentially private update of the approximation of the global machine learning model, for computing a differentially private update of the approximation of the global machine learning model; and

means for sending, to a server, the differentially private update of the approximation of the global machine learning model.

6. The apparatus as claimed in claim 5, wherein said one or more auxiliary variables comprise at least one of: one or more local dual variables of the previous iteration; and/or a global primal variable of the previous iteration.

7. The apparatus of claim 5 or 6, further comprising means for receiving an updated global machine learning model from the server.

8. The apparatus of claim 7, further comprising means for computing the deviation of the received updated global machine learning model from the global machine learning model.

9. An apparatus comprising:

means for computing a non-differentially private model-sized update of an approximation of a global machine learning model comprising computing an averaged second order partial derivative across one or more local data samples;

means for adding noise to the model-sized update of the approximation of the global machine learning model, for computing a differentially private model-sized update of the approximation of the global machine learning model; and

means for sending, to a server, the differentially private model-sized update of the approximation of the global machine learning model.

10. The apparatus of claim 9, wherein the means for computing the non-differentially private model-sized update of the approximation of the global machine learning model is for computing an averaged gradient across one or more local data samples.

11. The apparatus of any of claims 9 or 10, wherein the apparatus comprises means for clipping the non-differentially private model-sized update of the approximation of the global machine learning model.

12. The apparatus of claim 9, wherein the means for computing the non-differentially private model-sized update of the approximation of the global machine learning model is for computing a sum of one or more clipped gradients and one or more auxiliary variables, said one or more auxiliary variables relating to a previous iteration of the global machine learning model wherein the one or more clipped gradients are computed for one or more local data samples.

13. The apparatus of any of claims 9 to 12, further comprising means for receiving an updated global machine learning model from the server.

14. The apparatus of claim 13, further comprising means for computing the deviation of the received updated global machine learning model from the global machine learning model.

15. The apparatus as claimed in any preceding claim, wherein the apparatus comprises a user equipment and the global machine learning model is used to control the user equipment, said apparatus further comprising means for determining one or more parameters to be provided as one or more inputs to the global machine learning model.

16. The apparatus as claimed in claim 15, wherein the global machine learning model for controlling spectrum usage by the user equipment.

17. The apparatus as claimed in any of claims 1 to 14, wherein the apparatus comprises a vehicle and the global machine learning model is used to control one or more operations of the vehicle, said apparatus further comprising means for determining one or more parameters to be provided as one or more inputs to the global machine learning model, the one or more parameter comprising one or more parameters relating to the vehicle and/or one or more parameters relating to an environment around the vehicle.

18. The apparatus as claimed in claim 17, wherein the global model is for controlling one or more operations of the vehicle.

FIG. 1

S202: Compute model-
sized local update

204

S203: Clip and
add noise to
update, and send

S201: Initialize and
broadcast global model

206

202

200

208

S204: Calculate
updated global
model

# FIG. 2

FIG. 3

FIG. 4

FIG. 5a

FIG. 5b

FIG. 6a

FIG. 6b

FIG. 7

FIG. 8

FIG. 9

1007 1006

1000

1005

1003

1001

1004

1002

1008

1002a

1002b

FIG. 10

A1 computing a non-differentially private update of an approximation of a  global machine learning model

A2 -clipping and adding noise to the non-differentially private update of the approximation of the global machine learning model, for computing a differentially private update of the approximation of the global machine learning model

A3 - sending, to a server, the differentially private update of the approximation of the global machine learning model.

## FIG. 11

B1 computing a sum of one or more clipped gradients and  one or more auxiliary variables, wherein each of the one or more clipped gradients are computed for one or more local data samples, said one or more auxiliary variables relating to a previous iteration of a global machine learning model

B2 - computing a non-differentially private update of an approximation of a global machine learning model, using the sum of the one or more clipped gradients and the one or more auxiliary variables

B3 - adding noise to the non-differentially private update of the approximation of the global machine learning model, for computing a differentially private update of the approximation of the global machine learning model

B4 - sending, to a server, the differentially private update of the approximation of the global machine learning model.

## FIG. 12

C1 computing a non-differentially private model-sized update of an approximation of a global machine learning model

C2 -adding noise to the model-sized update of the approximation of the global machine learning model, for computing a differentially private model-sized update of the approximation of the global machine learning model

C3 - sending, to a server, the differentially private model-sized update of the approximation of the global machine learning model.

## FIG. 13

D1 broadcasting a global machine learning model to at least one client device

D2 - receiving one or more differentially private updates of an approximation of the global machine learning model, from the at least one client device

D3 - computing the average of the received one or more differentially private updates of the approximation of the global machine learning model, for updating the global machine learning model

D4 - broadcasting the updated global machine learning model to the at least one client device

## FIG. 14

Europäisches
Patentamt

European
Patent Office

Office européen
des brevets

## EUROPEAN SEARCH REPORT

**Application Number**

EP 25 15 7805

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MARCO AVELLA-MEDINA ET AL: "Differentially private inference via noisy optimization", ARXIV.ORG, CORNELL UNIVERSITY LIBRARY, 201 OLIN LIBRARY CORNELL UNIVERSITY ITHACA, NY 14853, [Online] 13 December 2023 (2023-12-13), XP091667418, Retrieved from the Internet: URL:https://arxiv.org/pdf/2103.11003> [retrieved on 2025-07-04] * Abstract * * p12-13 * | 1-4,9-18 | INV. G06N3/098 G06N3/084 |
| Y | Elgabli Anis ET AL: "FedNew: A Communication-Efficient and Privacy-Preserving Newton-Type Method for Federated Learning", , 17 June 2022 (2022-06-17), pages 1-25, XP093292949, Retrieved from the Internet: URL:https://arxiv.org/pdf/2206.08829 [retrieved on 2025-07-04] | 1-4,9-18 | TECHNICAL FIELDS SEARCHED (IPC) G06N |
| A | * Abstract * * p5, p7, p12 * | 6 | |

-/--

The present search report has been drawn up for all claims

| Place of search | Date of completion of the search | Examiner |
|---|---|---|
| The Hague | 14 July 2025 | Veynachter, Alexis |

EPO FORM 1503 03.82 (P04C01)

Europäisches
Patentamt

European
Patent Office

Office européen
des brevets

## EUROPEAN SEARCH REPORT

**Application Number**

EP 25 15 7805

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | RUDRAJIT DAS ET AL: "On the Convergence of Differentially Private Federated Learning on Non-Lipschitz Objectives, and with Normalized Client Updates", ARXIV.ORG, CORNELL UNIVERSITY LIBRARY, 201 OLIN LIBRARY CORNELL UNIVERSITY ITHACA, NY 14853, [Online] 16 April 2022 (2022-04-16), XP091193510, Retrieved from the Internet: URL:https://arxiv.org/pdf/2106.07094> [retrieved on 2025-07-04] * Abstract * * p7 * | 5-8 | |
| Y | Ganesh Arun ET AL: "Faster Differentially Private Convex Optimization via Second-Order Methods", , 22 May 2023 (2023-05-22), pages 1-46, XP093292953, Retrieved from the Internet: URL:https://arxiv.org/pdf/2305.13209 [retrieved on 2025-07-04] * Abstract * * p3,p7 * | 5-8 | TECHNICAL FIELDS SEARCHED (IPC) |
| A | US 2023/068386 A1 (AKDENIZ MUSTAFA RIZA [US] ET AL) 2 March 2023 (2023-03-02) * Abstract * * [0057],[0277],[1037],[1039] * * figure 1 * | 15-18 | |

The present search report has been drawn up for all claims

| Place of search | Date of completion of the search | Examiner |
|---|---|---|
| The Hague | 14 July 2025 | Veynachter, Alexis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 7805

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2025

| Patent document cited in search report | Publication date | Patent family member(s) | Publication date |
|---|---|---|---|
| US 2023068386 A1 | 02-03-2023 | CN 114930347 A | 19-08-2022 |
| | | EP 4100892 A1 | 14-12-2022 |
| | | US 2023068386 A1 | 02-03-2023 |
| | | WO 2021158313 A1 | 12-08-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Calibrating noise to sensitivity in private data analysis.. **DWORK, CYNTHIA et al.** Theory of Cryptography: Third Theory of Cryptography Conference, TCC 2006, New York, NY, USA, March 4-7, 2006. Proceedings 3. Springer, 2006